(19) Europäisches Patentamt / European Patent Office / Office européen des brevets

(11) **EP 3 712 454 B1**

(12) **EUROPEAN PATENT SPECIFICATION**

(45) Date of publication and mention
of the grant of the patent:
**02.10.2024   Bulletin 2024/40**

(21) Application number: **18875179.6**

(22) Date of filing: **05.11.2018**

(51) International Patent Classification (IPC):
**F16D 7/02** *(2006.01)*       **B60G 11/16** *(2006.01)*
**F16D 1/06** *(2006.01)*       **F16F 9/54** *(2006.01)*
**F16B 4/00** *(2006.01)*

(52) Cooperative Patent Classification (CPC):
**F16B 4/004; B60G 11/16; F16D 1/06; F16D 7/02; F16F 9/54**

(86) International application number:
**PCT/JP2018/041006**

(87) International publication number:
**WO 2019/093270 (16.05.2019 Gazette 2019/20)**

(54) **MATING MECHANISM**

PASSMECHANISMUS

MÉCANISME D'ACCOUPLEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.11.2017   JP 2017218358**

(43) Date of publication of application:
**23.09.2020   Bulletin 2020/39**

(73) Proprietor: **Oiles Corporation
Kanagawa 252-0811 (JP)**

(72) Inventors:
• **YAMADA, Tomohiro
Fujisawa-shi
Kanagawa 252-0811 (JP)**
• **MORISHIGE, Kouichi
Fujisawa-shi
Kanagawa 252-0811 (JP)**

(74) Representative: **Torggler & Hofmann
Patentanwälte - Rankweil
Torggler & Hofmann Patentanwälte
GmbH & Co KG
Hörnlingerstraße 3
Postfach 5
6830 Rankweil (AT)**

(56) References cited:
**JP-A- 2006 038 058     JP-A- 2009 133 338
JP-A- 2011 225 142     JP-B2- 6 061 578**

**Description**

Technical Field

The present invention relates to a mating mechanism provided with a member having an opening portion and another member having a base portion to be mated with the opening portion.

Background Art

There has been proposed a mating mechanism in which a plurality of recessed portions that are recessed in the radial direction are arranged in the circumferential direction in the inner side surface of a member that defines an opening portion, and a plurality of protruding portions that project in the radial direction from the outer side surface of a base portion are arranged in the circumferential direction (refer to, for example, Patent Literature 1).

At least one protruding portion is positioned at at least one recessed portion, and then the base portion is mated with or press-fitted in the opening portion. Thus, the displacement of at least one protruding portion in the circumferential direction is restricted by both end faces in the circumferential direction of at least one recessed portion, thereby restricting the relative rotation of one member with respect to the other member (the rotation of each of the opening portion and the base portion about the central axis thereof). Further, the remaining protruding portions are pressed against the inner side surface of the one member in a state of being disengaged at least partly from all of the plurality of recessed portions, thus preventing the base portion of the other member from being displaced in the axial direction from the opening portion of the one member.

Citation List

Patent Literature

Patent Literature 1: Japanese Patent No. 6061578

Summary of Invention

Technical Problem

However, if the base portion and the opening portion are required to be relatively positioned in the circumferential direction, then the operation cost for mating one member and the other member is accordingly required.

Hence, an object of the present invention is to provide a mating mechanism that enables a base portion of one member to be mated with or press-fitted in an opening portion of the other member such that the relative rotation thereof can be restricted without the need for the relative positioning of the base portion of the one member and the opening portion of the other member in the circumferential direction.

Solution to Problem

A mating mechanism according to a first aspect of the present invention includes a first member having a base portion defined by an outer side surface that has a plurality of protruding portions which are arranged in a circumferential direction and which project outward in a radial direction, and a second member having an opening portion defined by an inner side surface that has a plurality of recessed portions which are arranged along a circumferential direction and which are recessed outward in a radial direction.

The mating mechanism of the first aspect of the present invention is characterized in that, each of at least an $N_1$ number of protruding portions as the plurality of protruding portions is placed in a deviation angle range $[\theta_{1(2i-1)}, \theta_{1(2i)}]$ ($i = 1, 2, .., N_1$) in a first cylindrical coordinate system in which a central axis of the base portion of the first member serves as a z-axis, each of at least an $N_2$ number of recessed portions as the plurality of recessed portions is placed in a deviation angle range $[\theta_{2(2j-1)}, \theta_{2(2j)}]$ ($j = 1, 2, .., N_2$ ($\geq N_1$)) in a second cylindrical coordinate system in which a central axis of the opening portion of the second member serves as a z-axis, i (k) (k = 1, 2, ..) is defined as $\sigma_1(\{(k - 1) \bmod N_1\}+1)$ by using a bijection $\sigma_1$ of a sequence 11, 2, .. $N_1\}$, j(k) is defined as $\sigma_2(\{(k - 1) \bmod N_2\}+1)$ by using a bijection $\sigma_2$ of a sequence $\{1, 2, .. N_2\}$, and the plurality of protruding portions are arranged on the outer side surface of the base portion and the plurality of recessed portions are arranged on the inner side surface of the opening portion such that, for an arbitrary k, a state $S^-$ (k+1) is implemented by a time a state $S^-$ (k), in which $\theta_{1(2i(k)-1)} = \theta_{2(2j(k)-1)}$ and $\theta_{1(2i(k))} < \theta_{2(2j(k))}$, transitions to a state $S^+$ (k), in which $\theta_{2(2j(k)-1)} < \theta_{1(2i(k)-1)}$ and $\theta_{1(2i(k))} = \theta_{2(2j(k))}$, in a course of relatively rotating the first cylindrical coordinate system and the second cylindrical coordinate system with the z-axes thereof made to coincide with each other.

According to the mating mechanism of the first aspect of the present invention, the base portion of the first member can be mated with the opening portion of the second member in a state, in which at least one entire protruding portion has entered in at least one recessed portion, without the need for the relative positioning of the opening portion of the second member and the base portion of the first member in the circumferential direction. The displacement of at least one protruding portion in the circumferential direction is restricted by the both end faces in the circumferential direction of at least one recessed portion, so that the base portion of the first member can be mated with or press-fitted in the opening portion of the second member while making it possible to restrict the relative rotations of the first member and the second member.

In the mating mechanism of a variant of the first aspect, each of the $N_1$ number of protruding portions is placed in the circumferential direction on the outer side surface, which defines the base portion, such that each of the $N_1$ number of protruding portions has a deviation angle width $\Delta_1$ and the $N_1$ number of protruding portions have an $N_1$-fold symmetry as the rotational symmetry about the z-axis in the first cylindrical coordinate system, and each of the $N_2$ number of recessed portions is placed in the deviation angle range that has a deviation angle width $\Delta_2 = \Delta_1 + \varepsilon (k) + 360° / (N_1 \cdot N_2)$ ($\varepsilon (k) \geq 0$) with reference to a deviation angle $\theta_2 (k) = (i (k) - 1) \times 360° / N_1 + k \times (\Delta_2 - \Delta_1)$ in the second cylindrical coordinate system.

According to the mating mechanism having the configuration described above, in the first member, even if the $N_1$ number of protruding portions are arranged in the circumferential direction on the outer side surface, which defines the base portion, such that the $N_1$ number of protruding portions have the $N_1$-fold symmetry as a rotational symmetry about the z-axis, the base portion of the first member can be mated with the opening portion of the second member in a state, in which at least one entire protruding portion has entered in at least one recessed portion, without the need for the relative positioning of the opening portion of the second member and the base portion of the first member in the circumferential direction.

In the mating mechanism of a second variant of the first aspect, the $N_2$ number of recessed portions are arranged in the circumferential direction in the inner side surface, which defines the opening portion, such that each of the $N_2$ number of recessed portions has a deviation angle width $\Delta_2$ and the $N_2$ number of recessed portions have an $N_2$-fold symmetry as the rotational symmetry about the z-axis in the second cylindrical coordinate system, and each of the $N_1$ number of protruding portions is placed in the deviation angle range that has a deviation angle width $\Delta_1 = \Delta_2 - \{\varepsilon (k) + 360° / (N_1 \cdot N_2)\}$ ($\varepsilon (k) \geq 0$) with reference to the deviation angle $\theta_1 (k) = (i (k) - 1) \times 360° / N_2 + k \times (\Delta_2 - \Delta_1)$ in the first cylindrical coordinate system.

According to the mating mechanism having the configuration described above, in the second member, even if the $N_2$ number of recessed portions are arranged in the circumferential direction in the inner side surface, which defines the opening portion, such that the $N_2$ number of recessed portions have an $N_2$-fold symmetry as the rotational symmetry about the z-axis, the base portion of the first member can be mated with the opening portion of the second member in a state, in which at least one entire protruding portion has entered in at least one recessed portion, without the need for the relative positioning of the opening portion of the second member and the base portion of the first member in the circumferential direction.

In the mating mechanism of the first aspect, preferably, the plurality of protruding portions are arranged on the outer side surface of the base portion and the plurality of recessed portions are arranged in the inner side surface of the opening portion such that the state $S^+ (k)$ and the state $S^- (k+1)$ are simultaneously implemented in the course of relatively rotating the first cylindrical coordinate system and the second cylindrical coordinate system, having the z-axes thereof made to coincide with each other.

According to the mating mechanism having the configuration described above, the width in the circumferential direction of the recessed portions arranged in the inner side surface, which defines the opening portion of the second member, can be reduced to a bare minimum. Thus, an appropriate deviation angle width (the thickness or the dimension in the circumferential direction) of a partition portion that separates a pair of adjacent recessed portions can be obtained to secure a strength that enables the partition portion to survive a force applied from the entire protruding portion entering in the recessed portion when the first member and the second member relatively rotate.

A mating mechanism according to a second aspect of the present invention includes a first member having a base portion defined by an outer side surface that has a plurality of recessed portions which are arranged in a circumferential direction and which are recessed inward in a radial direction, and a second member having an opening portion defined by an inner side surface that has a plurality of protruding portions which are arranged along a circumferential direction and which project inward in a radial direction.

The mating mechanism of the second aspect of the present invention is characterized in that, each of at least an $N_1$ number of protruding portions as the plurality of protruding portions is placed in a deviation angle range $[\theta_{1(2i-1)}, \theta_{1(2i)}]$ ($i = 1, 2, .., N_1$) in a first cylindrical coordinate system in which a central axis of the opening portion of the second member serves as a z-axis, each of at least an $N_2$ number of recessed portions as the plurality of recessed portions is placed in a deviation angle range $[\theta_{2(2j-1)}, \theta_{2(2j)}]$ ($j = 1, 2, .., N_2$) in a second cylindrical coordinate system in which a central axis of the base portion of the first member serves as a z-axis, i (k) (k = 1, 2, ..) is defined as $\sigma_1(\{(k - 1) \bmod N_1\}+1)$ by using a bijection $\sigma_1$ of a sequence $\{1, 2, .. N_1\}$, j(k) is defined as $\sigma_2(\{(k - 1) \bmod N_2\}+1)$ by using a bijection $\sigma_2$ of a sequence $\{1, 2, .. N_2\}$, and the plurality of recessed portions are arranged in the outer side surface of the base portion and the plurality of protruding portions are arranged on the inner side surface of the opening portion such that, for an arbitrary k, a state $S^- (k+1)$ is implemented by a time a state $S^- (k)$, in which $\theta_{1(2i(k)-1)} = \theta_{2(2j(k)-1)}$ and $\theta_{1(2i(k))} < \theta_{2(2j(k))}$, transitions to a state $S^+ (k)$, in which $\theta_{2(2j(k)-1)} < \theta_{1(2i(k)-1)}$ and $\theta_{1(2i(k))} = \theta_{2(2j(k))}$ in a course of relatively rotating the first cylindrical coordinate system and the second cylindrical coordinate system with the z-axes thereof made to coincide with each other.

According to the mating mechanism of the second aspect of the present invention, the base portion of the first member can be mated with the opening portion of the second member in a state, in which at least one entire protruding portion is placed in at least one recessed portion, without the need for the relative positioning of the opening portion of the second member and the base portion of the first member in the circumferential direction. The displacement of at least one protruding portion in the circumferential direction is restricted by the both end faces in the circumferential direction of at least one recessed portion, so that the base portion of the first member can be mated with or press-fitted in the opening portion of the second member while making it possible to restrict the relative rotation of the first member and the second member.

In the mating mechanism of a first variant of the second aspect, the $N_1$ number of protruding portions are arranged in the circumferential direction on the inner side surface, which defines the opening portion, such that each of the $N_1$ number of protruding portions has a deviation angle width $\Delta_1$ and the $N_1$ number of protruding portions have an $N_1$-fold symmetry as a rotational symmetry about the z-axis in the first cylindrical coordinate system, and each of the $N_2$ number of recessed portions is placed in the deviation angle range that has a deviation angle width $\Delta_2 = \Delta_1 + \varepsilon (k) + 360° / (N_1 \cdot N_2)$ $(\varepsilon (k) \geq 0)$ with reference to the deviation angle $\theta_2 (k) = (i (k) - 1) \times 360° / N_1 + k \times (\Delta_2 - \Delta_1)$ in the second cylindrical coordinate system.

According to the mating mechanism having the configuration described above, in the second member, even if the $N_1$ number of protruding portions are arranged in the circumferential direction on the inner side surface, which defines the opening portion, such that the $N_1$ number of protruding portions have the $N_1$-fold symmetry as the rotational symmetry about the z-axis, the base portion of the first member can be mated with the opening portion of the second member in a state, in which at least one entire protruding portion has entered in at least one recessed portion, without the need for the relative positioning of the opening portion of the second member and the base portion of the first member in the circumferential direction.

In the mating mechanism of the second aspect, preferably, the $N_2$ number of recessed portions are arranged in the circumferential direction in the outer side surface, which defines the base portion, such that each of the $N_2$ number of recessed portions has a deviation angle width $\Delta_2$ and the $N_2$ number of recessed portions have an $N_2$-fold symmetry as a rotational symmetry about the z-axis in the second cylindrical coordinate system, and each of the $N_1$ number of protruding portions is placed in the deviation angle range that has a deviation angle width $\Delta_1 = \Delta_2 - \{\varepsilon (k) + 360° / (N_1 . N_2)\}$ $(\varepsilon (k) \geq 0)$ with reference to the deviation angle $\theta_1 (k) = (i (k) - 1) \times 360° / N_2 + k \times (\Delta_2 - \Delta_1)$ in the first cylindrical coordinate system.

According to the mating mechanism having the configuration described above, in the first member, even if the $N_2$ number of recessed portions are arranged in the circumferential direction in the outer side surface, which defines the opening portion, such that the $N_2$ number of recessed portions have the $N_2$-fold symmetry as the rotational symmetry about the z-axis, the base portion of the first member can be mated with the opening portion of the second member in a state, in which at least one entire protruding portion has entered in at least one recessed portion, without the need for the relative positioning of the opening portion of the second member and the base portion of the first member in the circumferential direction.

In the mating mechanism of a second variant of the second aspect, the plurality of recessed portions are arranged in the outer side surface of the base portion and the plurality of protruding portions are arranged on the inner side surface of the opening portion such that the state $S^+ (k)$ and the state $S^- (k+1)$ are simultaneously implemented in the course of relatively rotating the first cylindrical coordinate system and the second cylindrical coordinate system with the z-axes thereof made to coincide with each other.

According to the mating mechanism having the configuration described above, the width in the circumferential direction of each of the recessed portions arranged in the outer side surface of the base portion of the first member can be reduced to a bare minimum. Thus, an appropriate deviation angle width (the thickness or the dimension in the circumferential direction) of a partition portion that separates a pair of adjacent recessed portions can be obtained to secure a strength that enables the partition portion to survive a force applied from the entire protruding portion entering in the recessed portion when the first member and the second member relatively rotate.

Brief Description of Drawings

FIG. 1 is an explanatory diagram related to the configuration of a mating mechanism as a first embodiment of the present invention;
FIG. 2 is a diagram illustrating the placement of protruding portions on the outer side surface of a base portion of a first member;
FIG. 3 is a diagram illustrating the placement of recessed portions in the inner side surface of an opening portion of a second member;
FIG. 4 is an explanatory diagram related to the operation of the mating mechanism as the first embodiment of the present invention;
FIG. 5 is an explanatory diagram related to the configuration of a mating mechanism as a second embodiment of the present invention;
FIG. 6 is a diagram illustrating the placement of recessed portions in the outer side surface of a base portion of a first member; and
FIG. 7 is a diagram illustrating the placement of protruding portions on the inner side surface of an opening portion of a second member.

Description of Embodiments

(First Embodiment)

(Configuration)

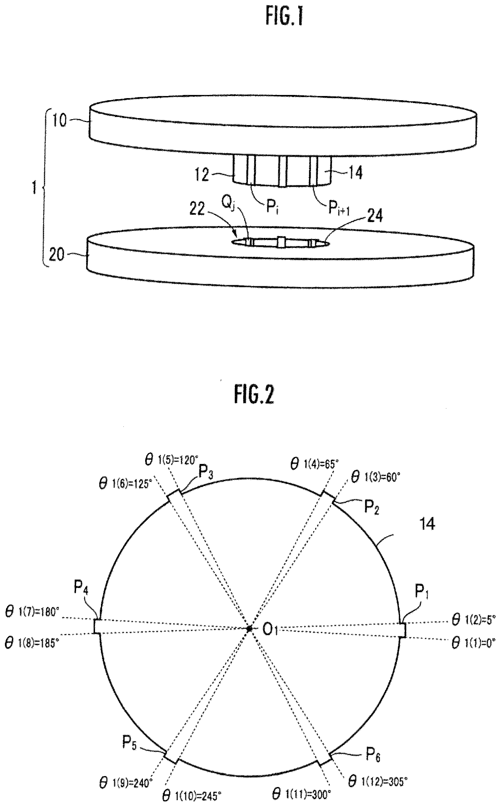

A mating mechanism 1 as a first embodiment of the present invention illustrated in FIG. 1 includes a first member 10 and a second member 20. The first member 10 and the second member 20 schematically illustrated in FIG. 1 constitute, for example, a lower case and a spring seat, respectively, of a sliding bearing as a thrust sliding bearing device for an automobile suspension.

The first member 10 has a base portion 12 defined by an outer side surface 14, which is a substantially columnar side surface. The outer side surface 14 may alternatively have any shape obtained by rotating any linear segment or curve segment about an axis, such as a substantially truncated cone side surface shape or a part of an elliptical sphere surface. An $N_1$ number ($N_1$ = 6 in the present embodiment) of protruding portions $P_1$ to $P_6$, which project outward in a radial direction that is perpendicular with respect to a central axis $O_1$ of the base portion 12, are arranged in a circumferential direction on the outer side surface 14 that defines the base portion 12 of the first member 10. With respect to a direction that is parallel to the central axis $O_1$ of the base portion 12, the position (the height position when the base portion 12 is observed sideways), the manner of extending, and the shape of protruding portions $P_i$ (i = 1, 2, .. 6) may be the same for all the protruding portions, or may be different for at least some of the protruding portions. The shape of the protruding portions $P_i$ in the cross sections thereof or the shape thereof observed in a top view is substantially trapezoidal in FIG. 2; however, the protruding portions $P_i$ may have various other shapes, such as a rectangular shape, a semicircular shape, a semi-elliptical shape, and a shape that combines a trapezoid and a semicircle having at least a part of the upper base of the trapezoid as the diameter thereof.

The six protruding portions $P_1$ to $P_6$ are arranged on an outer side surface 14 of the base portion 12 such that the six protruding portions $P_1$ to $P_6$ have a six-fold symmetry as a rotational symmetry in a first cylindrical coordinate system in which the central axis $O_1$ of the base portion 12 of the first member 10 serves as a z-axis. A deviation angle width $\Delta_1$ (maximum width) of each protruding portion $P_i$ is 5°. More specifically, as illustrated in FIG. 2 and Table 1, the protruding portions $P_i$ are placed in six deviation angle ranges $[\theta_{1(2i-1)}, \theta_{1(2i)}]$ in the first cylindrical coordinate system having the central axis $O_1$ of the base portion 12 of the first member 10 as the z-axis.

[Table 1]

| $P_1$ | | $P_2$ | | $P_3$ | | $P_4$ | | $P_5$ | | $P_6$ | |
|---|---|---|---|---|---|---|---|---|---|---|---|
| $\theta_{1(1)}$ | $\theta_{1(2)}$ | $\theta_{1(3)}$ | $\theta_{1(4)}$ | $\theta_{1(5)}$ | $\theta_{1(6)}$ | $\theta_{1(7)}$ | $\theta_{1(8)}$ | $\theta_{1(9)}$ | $\theta_{1(10)}$ | $\theta_{1(11)}$ | $\theta_{1(12)}$ |
| 0° | 5° | 60° | 65° | 120° | 125° | 180° | 185° | 240° | 245° | 300° | 305° |

The second member 20 has an opening portion 22 defined by an inner side surface 24, which is a substantially columnar side surface. The inner side surface 24 may alternatively have any shape obtained by rotating any linear segment or curve segment about an axis, such as a substantially truncated cone side surface shape or a part of an elliptical sphere surface. The opening portion 22 may constitute a through hole of the second member 20 or may constitute a hole or a counterbore of the second member 20. An $N_2$ number ($N_2$ = 12 in the present embodiment) of recessed portions $Q_1$ to $Q_{12}$, which are recessed outward in the radial direction that is perpendicular to a central axis $O_2$ of the opening portion 22, are arranged in the circumferential direction in the inner side surface 24 that defines the opening portion 22 of the second member 20. The recessed portions $Q_j$ (j = 1 to 12) extend in a direction that is parallel to the central axis $O_2$ of the opening portion 22.

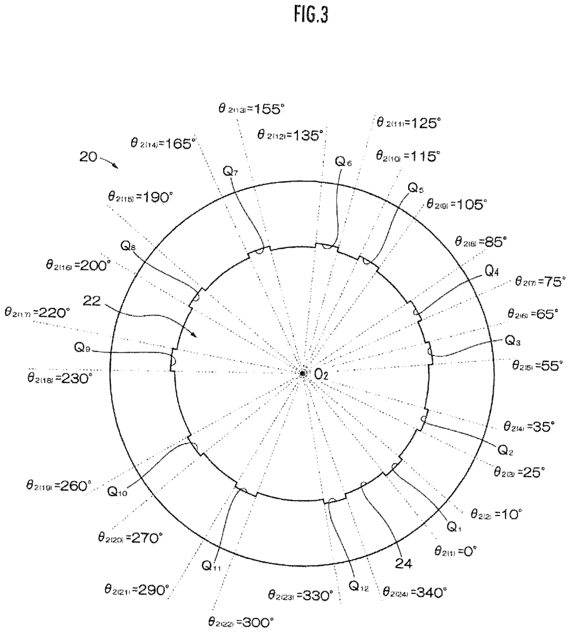

The recess depth of each recessed portion $Q_j$ in the radial direction with reference to the inner side surface 24, which defines the opening portion 22 of the second member 20, and the protrusion amount of each protruding portion $P_i$ in the radial direction with reference to the outer side surface 14, which defines the base portion 12 of the first member 10, are designed such that a distal end surface or a top surface of the protruding portion $P_i$ comes in contact with the bottom surface of the recessed portion $Q_j$ or moves apart from the bottom surface thereof when at least one entire protruding portion $P_i$ has entered in at least one recessed portion $Q_j$. For example, if the diameter of the base portion 12 of the first member 10 and the diameter of the opening portion 22 of the second member 20 are the same or substantially the same, then the recess depth of each recessed portion $Q_j$ in the radial direction is designed to be larger than the protrusion amount of each protruding portion $P_i$ in the radial direction. Although the cross-sectional shape of each recessed portion $Q_j$ illustrated in FIG. 3 is substantially trapezoidal, the recessed portion $Q_j$ may have various other shapes, such as a rectangular shape, a semicircular shape, a semi-elliptical shape, and a shape that combines a trapezoid and a semicircle having at least a part of the upper base of the trapezoid as the diameter thereof, insofar as the shape can entirely accommodate each protruding portion $P_i$.

The twelve recessed portions $Q_1$ to $Q_{12}$ are arranged in the circumferential direction of the inner side surface 24 of the second member 20 such that the twelve recessed portions $Q_1$ to $Q_{12}$ do not have a rotational symmetry in a second cylindrical coordinate system, which has the central axis $O_2$ of the opening portion 22 of the second member 20 as the z-axis. More specifically, in the second cylindrical coordinate system, each of the $N_2$ number of recessed portions $Q_{j(k)}$ is placed in a deviation angle range that has a deviation angle width $\Delta_2$ with reference to a deviation angle $\theta_2$ (k) represented by relational expression (11).

$$\theta_2 (k) = (i (k) - 1) \times 360° / N_1 + k \times (\Delta_2 - \Delta_1) .. (11)$$

$$\Delta_2 = \Delta_1 + \varepsilon (k) + 360°/ (N_1 \cdot N_2) (\varepsilon (k) \geq 0) .. (12)$$

i (k) (k = 1, 2, .. $N_1$) is defined by relational expression (13) by using a bijection $\sigma_1$ of a sequence {1, 2, .. $N_1$}.

$$i (k) = \sigma_1 (\{(k - 1) \bmod N_1\} + 1) \quad .. (13)$$

The bijection or permutation $\sigma_1$ of the sequence {1, 2, .. $N_1$} may be randomly selected. In the present embodiment, however, the bijection or permutation $\sigma_1$ of the sequence {1, 2, .. $N_1$} is defined by relational expression (14).

$$\sigma_1 : \{1, 2, 3, 4, 5, 6\} \rightarrow \{3, 4, 2, 5, 1, 6\} \quad .. (14)$$

j (k) is defined by relational expression (15) by using a bijection $\sigma_2$ of a sequence 11, 2, .. $N_2$}.

$$j (k) = \sigma_2 (\{(k - 1) \bmod N_2\} + 1) \quad .. (15)$$

The bijection or permutation $\sigma_2$ of the sequence 11, 2, .. $N_2$} may be randomly selected. Preferably, a bijection by which an $N_2$ number of recessed portions $Q_{j(k)}$ are arranged apart from each other is selected. As will be discussed later, for the permutation $\sigma_2$, a bijection may be selected, by which equal to or less than a ($N_2$ - 1) number of recessed portions are apparently arranged apart from each other due to the overlapping of some of the $N_2$ number of recessed portions $Q_{j(k)}$. In the present embodiment, the bijection or permutation $\sigma_2$ of the sequence 11, 2, .. $N_2$} is defined by relational expression (16).

$$\sigma_2 : \{1, 2, 3, 4, 5, 6, 7, 8, 9, 10, 11, 12\}$$

$$\rightarrow \{6, 8, 4, 10, 2, 12, 7, 9, 5, 11, 3, 1\} \quad .. (16)$$

Table 2 illustrates the corresponding relationship among "k," "i (k)," and "j (k)."

[Table 2]

| k | 1 | 2 | 3 | 4 | 5 | 6 | 7 | 8 | 9 | 10 | 11 | 12 |
|---|---|---|---|---|---|---|---|---|---|---|---|---|
| i(k) | 3 | 4 | 2 | 5 | 1 | 6 | 3 | 4 | 2 | 5 | 1 | 6 |
| j(k) | 6 | 8 | 4 | 10 | 2 | 12 | 7 | 9 | 5 | 11 | 3 | 1 |

Thus, as illustrated in FIG. 3 and Table 3, the recessed portions $Q_j$ are placed in the twelve deviation angle ranges $[\theta_{2(2j-1)}, \theta_{2(2j)}]$ in the second cylindrical coordinate system.

[Table 3]

| $Q_1$ | | $Q_2$ | | $Q_3$ | | $Q_4$ I | | $Q_5$ | | $Q_6$ | |
|---|---|---|---|---|---|---|---|---|---|---|---|
| $\theta_{2(1)}$ | $\theta_{2(2)}$ | $\theta_{2(3)}$ | $\theta_{2(4)}$ | $\theta_{2(5)}$ | $\theta_{2(6)}$ | $\theta_{2(7)}$ | $\theta_{2(8)}$ | $\theta_{2(9)}$ | $\theta_{2(10)}$ | $\theta_{2(11)}$ | $\theta_{2(12)}$ |
| 0° | 10° | 25° | 35° | 55° | 65° | 75° | 85° | 105° | 115° | 125° | 135° |
| $Q_7$ | | $Q_6$ | | $Q_9$ | | $Q_{10}$ | | $Q_{11}$ | | $Q_{12}$ | |
| $\theta_{2(13)}$ | $\theta_{2(14)}$ | $\theta_{2(15)}$ | $\theta_{2(16)}$ | $\theta_{2(17)}$ | $\theta_{2(18)}$ | $\theta_{2(19)}$ | $\theta_{2(20)}$ | $\theta_{2(21)}$ | $\theta_{2(22)}$ | $\theta_{2(23)}$ | $\theta_{2(24)}$ |
| 155° | 165° | 190° | 200° | 220° | 230° | 260° | 270° | 290° | 300° | 330° | 340° |

The deviation angle width $\Delta_1$ of each of the protruding portions $P_{i(k)}$ in the first cylindrical coordinate system is 5°, the number $N_1$ of the protruding portions $P_{i(k)}$ is six, and the number $N_2$ of the recessed portions $Q_{j(k)}$ is twelve, so that the deviation angle width $\Delta_2$ of each of the recessed portions $Q_{j(k)}$ is 10° (refer to relational expression (12)).

Although $\varepsilon (k) = 0°$ in the present embodiment, $\varepsilon (k)$ may take positive values in the recessed portions $Q_j$. For example, the deviation angle range (the thickness in the circumferential direction) of each partition portion between a third recessed portion $Q_3$ and a fourth recessed portion $Q_4$ and the partition portion between a fifth recessed portion $Q_5$ and a sixth recessed portion $Q_6$, which are the partition portions having the smallest thicknesses in the circumferential direction among the partitions separating adjacent recessed portions, are 10°, so that the $\varepsilon (k)$ may take a positive value below 10°, such as 2° or 7°. However, if the thickness of a partition portion in the circumferential direction is excessively small, then the partition portion may be unduly deformed or damaged when the protruding portion $P_i$ is pressed against the partition portion. For this reason, the $\varepsilon (k)$ is preferably selected such that the thickness of the partition portion in the circumferential direction is greater than the thickness in the radial direction (the recess depth of each recessed portion $Q_j$ in the radial direction).

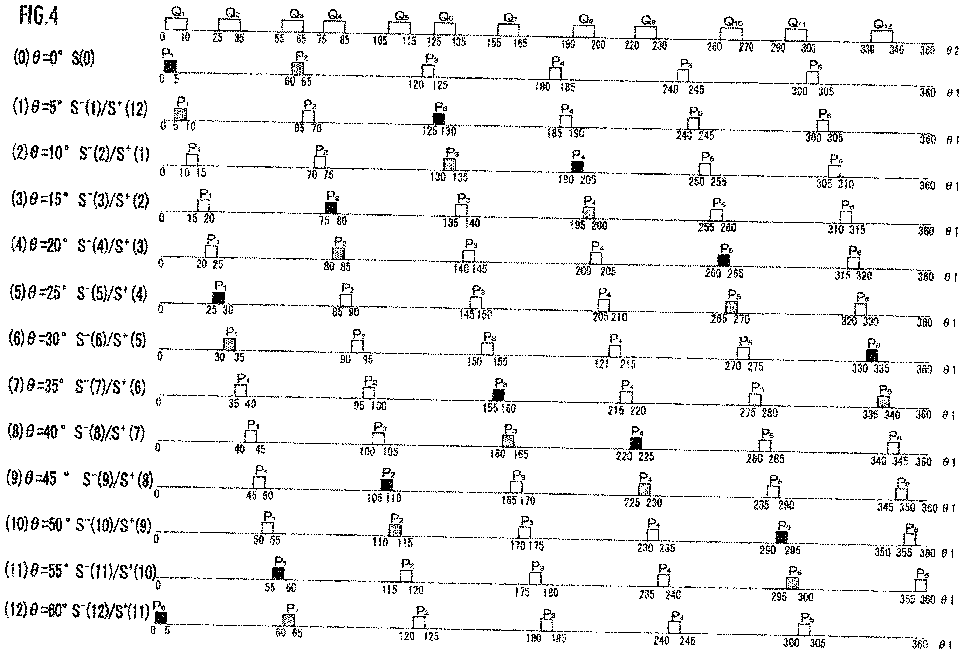

The uppermost stage in FIG. 4 illustrates, by the rectangles, the deviation angle ranges in which the recessed portions $Q_{j(k)}$ are placed, the axis of abscissas indicating a deviation angle $\theta_2$. The stages below the uppermost stage in FIG. 4 illustrate, by the rectangles, the deviation angle ranges in which the protruding portions $P_{i(k)}$ are placed, the axis of abscissas indicating the deviation angle $\theta_1$. In FIG. 4, (0) to (12) indicate how the relative placement relationship of each protruding portion $P_{i(k)}$ with respect to each recessed portion $Q_{j(k)}$ transitions in the course of relatively rotating the first cylindrical coordinate system and the second cylindrical coordinate system with the z-axes thereof made to coincide with each other.

A state S (0) corresponds to a state in which the references of the first cylindrical coordinate system and the second cylindrical coordinate system are made to coincide. In the present embodiment, the state S (0) and a state S⁻ (12) denote virtually the same state, because the protruding portions $P_i$ are arranged to exhibit the rotational symmetry, which will be discussed later. The protruding portions $P_i$ are arranged in the circumferential direction on the outer side surface 14, which defines the base portion 12 of the first member 10, and the recessed portions $Q_j$ are arranged in the circumferential direction in the inner side surface 24, which defines the opening portion 22 of the second member 20, such that, on an arbitrary k, the state S⁻ (k+1) is implemented by the time the state S⁻ (k) transitions to a state S⁺ (k) in the course of relatively rotating the first cylindrical coordinate system and the second cylindrical coordinate system.

The state S⁻ (k) denotes a state in which an i(k)-th protruding portion $P_{i(k)}$ is entirely included in the deviation angle range of a j(k)-th recessed portion $Q_{j(k)}$, and the lower limit value of the deviation angle range of the i(k)-th protruding portion $P_{i(k)}$ and the lower limit value of the deviation angle range of the j(k)-th recessed portion $Q_{j(k)}$ coincide with each other (a state in which $\theta_{1(2i(k)-1)} = \theta_{2(2j(k)-1)}$ and $\theta_{1(2i(k))} < \theta_{2(2j(k))}$). Each of (1) to (12) in FIG. 4 indicates that the state $S^-$(k) is implemented by a protruding portion $P_{i(k)}$ denoted by a black rectangle and a recessed portion $Q_{j(k)}$ which is directly above the protruding portion $P_{i(k)}$ and which exists in the deviation angle range that includes the protruding portion $P_{i(k)}$.

In each of (0) to (12) in FIG. 4, a protruding portion $P_{i(k')}$ denoted by a blank rectangle indicates that at least a part of the deviation angle range thereof is out of the deviation angle range of the recessed portions $Q_{j(k)}$.

The state $S^+$(k) denotes a state in which the i(k)-th protruding portion $P_{i(k)}$ is entirely included in the deviation angle range of the j(k)-th recessed portion $Q_{j(k)}$, and the upper limit value of the deviation angle range of the i(k)-th protruding portion $P_{i(k)}$ and the upper limit value of the deviation angle range of the j(k)-th recessed portion $Q_{j(k)}$ coincide with each other (a state in which $\theta_{2(2j(k)-1)} < \theta_{1(2i(k)-1)}$ and $\theta_{1(2i(k))} = \theta_{2(2j(k))}$). Each of (1) to (12) in FIG. 4 indicates that the state $S^+$(k) is implemented by a protruding portion $P_{i(k)}$ denoted by a gray rectangle and a recessed portion $Q_{j(k)}$ which is directly above the protruding portion $P_{i(k)}$ and which exists in the deviation angle range which includes the protruding portion $P_{i(k)}$.

In the present embodiment, the state $S^-$(k+1) is implemented at the moment the state $S^-$(k) transitions to a state $S^+$(k) in the course of relatively rotating the first and the second cylindrical coordinate systems. This is because $\varepsilon$(k) = 0°. If $\varepsilon$(k) > 0°, then the state $S^-$(k+1) can be implemented before the state $S^-$(k) transitions to the state $S^+$(k) in the course of relatively rotating the first and the second cylindrical coordinate systems.

(Operation)

As is obvious from FIG. 4 and Table 4, the state S(k) is implemented if the relative rotational angle of the first cylindrical coordinate system and the second cylindrical coordinate system is in the range of $n \times (\Delta_2 - \Delta_1)$ to $(n + 1) \times (\Delta_2 - \Delta_1)$ (in the present embodiment, $\Delta_2 - \Delta_1 = 5°$). Here, n denotes a positive integer, and k = {(n - 1) mod $N_2$} + 1 (the same will apply hereinafter). The state S(k) denotes a state in which the deviation angle range $[\theta_{1(2i(k)-1)}, \theta_{1(2i(k))}]$ of the i(k)-th protruding portion $P_{i(k)}$ is entirely included in the deviation angle range $[\theta_{2(2j(k)-1)}, \theta_{2(2j(k))}]$ of the j(k)-th recessed portion $Q_{j(k)}$. The state $S^-$(k) and the state $S^+$(k) both correspond to the state S(k). In other words, if the base portion 12 is mated with or inserted in the opening portion 22 in the state S(k), then the i(k)-th protruding portion $P_{i(k)}$ is entirely accommodated in the j(k)-th recessed portion $Q_{j(k)}$.

The combination of "i(k)" and "j(k)" (refer to Table 2) indicates the transition of the combination of a protruding portion and a recessed portion having the deviation angle range that includes the entire deviation angle range of the protruding portion in the course of the relative rotation of the first and the second cylindrical coordinate systems.

The $(\Delta_2 - \Delta_1)$ denotes a deviation angle width representing the displacement allowance of a protruding portion $P_i$ in a recessed portion $Q_j$ in the state in which the base portion 12 has been mated with or inserted in the opening portion 22 and the entire protruding portion $P_i$ has entirely entered in or has been accommodated in the recessed portion $Q_j$, thus corresponding to an angle that allows the relative rotation of the first member 10 and the second member 20. Table 4 collectively illustrates the state S(k).

[Table 4]

| State | |
|---|---|
| S(1) | The entire deviation angle range of a 3rd protruding portion $P_3$ is included in the deviation angle range of a 6th recessed portion $Q_6$. |
| S(2) | The entire deviation angle range of a 4th protruding portion $P_4$ is included in the deviation angle range of an 8th recessed portion $Q_8$. |
| S(3) | The entire deviation angle range of a 2nd protruding portion $P_2$ is included in the deviation angle range of a 4th recessed portion $Q_4$. |
| S(4) | The entire deviation angle range of a 5th protruding portion $P_5$ is included in the deviation angle range of a 10th recessed portion $Q_{10}$. |
| S(5) | The entire deviation angle range of a 1st protruding portion $P_1$ is included in the deviation angle range of a 2nd recessed portion $Q_2$. |
| S(6) | The entire deviation angle range of a 6th protruding portion $P_6$ is included in the deviation angle range of a 12th recessed portion $Q_{12}$. |

(continued)

| State | |
|---|---|
| S(7) | The entire deviation angle range of the 3rd protruding portion $P_3$ is included in the deviation angle range of a 7th recessed portion $Q_7$. |
| S(8) | The entire deviation angle range of the 4th protruding portion $P_4$ is included in the deviation angle range of a 9th recessed portion $Q_9$. |
| S(9) | The entire deviation angle range of the 2nd protruding portion $P_2$ is included in the deviation angle range of a 5th recessed portion $Q_5$. |
| S(10) | The entire deviation angle range of the 5th protruding portion $P_5$ is included in the deviation angle range of an 11th recessed portion $Q_{11}$. |
| S(11) | The entire deviation angle range of the 1st protruding portion $P_1$ is included in the deviation angle range of the 3rd recessed portion $Q_3$. |
| S(12) | The entire deviation angle range of the 6th protruding portion $P_6$ is included in the deviation angle range of a 1st recessed portion $Q_1$. |

The protruding portions $P_i$ are placed in a six-fold symmetrical manner (i.e. $k = \{(n - 1) \bmod N_2\} + 1$), so that the state in which the relative rotational angle of the first and the second cylindrical coordinate systems is a multiple 60°, starting from a state S (0) ( $= 5° \times N_2$) (i.e. the state S⁻ (12) in the present embodiment) is virtually the same as the state S (0) (refer to (0) and (12) in FIG. 4). Hence, according to the present embodiment, in the state S⁺ (12), the sequence {6, 1, 2, 3, 4, 5} of an index i denoting the protruding portions $P_i$ is substituted by {1, 2, 3, 4, 5, 6} and then the states S (1) to S (12) are implemented in that order (refer to (1) to (12) in FIG. 4).

(Effect)

Thus, when the base portion 12 of the first member 10 is press-fitted in the opening portion 22 of the second member 20, at least one entire protruding portion $P_i$ among the plurality of protruding portions $P_1$ to $P_6$ placed on the outer side surface 14 of the base portion 12 can enter into at least one recessed portion $Q_j$ among the plurality of recessed portions $Q_1$ to $Q_{12}$ placed in the inner side surface 24 which defines the opening portion 22. This makes it possible to prevent the at least one protruding portion $P_i$ from deforming by being subjected to a pressure in the radial direction applied by the inner side surface 24 that defines the opening portion 22. The displacement in the circumferential direction of the at least one protruding portion $P_i$ is restricted by both end faces in the circumferential direction of the at least one recessed portion $Q_j$, thus restricting the relative rotation of the base portion 12 of the first member 10 and the opening portion 22 of the second member 20.

Further, the remaining protruding portions $P_{i'}$ are pressed against the inner side surface 24, which defines the opening portion 22, at least partly, thus preventing the base portion 12 of the first member 10 from slipping off of the opening portion 22 of the second member 20.

(Second Embodiment)

(Configuration)

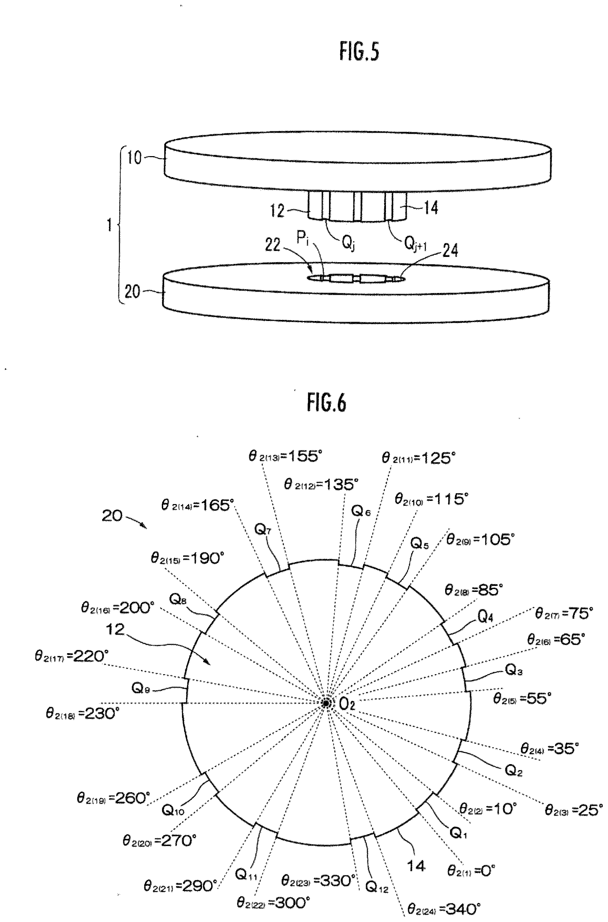

A mating mechanism 1 as a second embodiment of the present invention illustrated in FIG. 5 includes a first member 10 and a second member 20, as with the first embodiment. The second embodiment has the same configuration as that of the first embodiment except that a base portion 12 of the first member 10 is provided with a plurality of recessed portions $Q_j$, which are recessed inward in the radial direction, rather than a plurality of protruding portions, and an opening portion 22 of the second member 20 is provided with a plurality of protruding portions $P_i$, which protrude inward in the radial direction, rather than a plurality of recessed portions. Hence, like constituent elements as those of the first embodiment will be assigned like reference numerals and the descriptions thereof will be omitted.

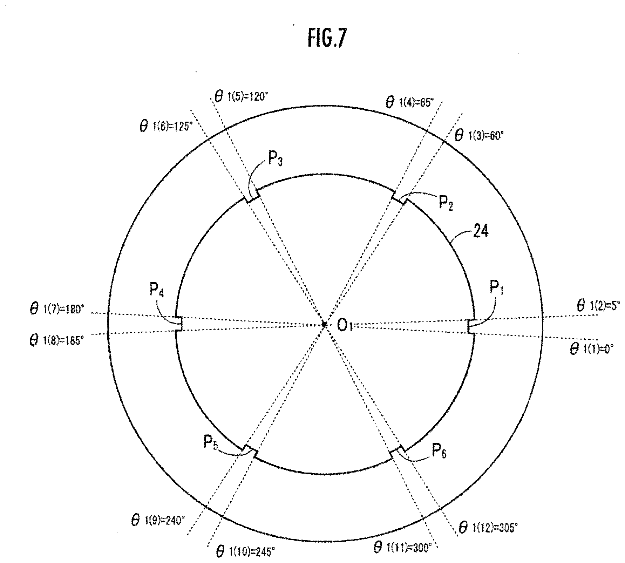

An $N_1$ number ($N_1 = 6$ in the present embodiment) of protruding portions $P_1$ to $P_6$, which project inward in the radial direction, are arranged in a circumferential direction on the inner side surface 24 that defines the opening portion 22 of the second member 20. With respect to a direction that is parallel to a central axis $O_1$ of the opening portion 22, the position (the height position), the manner of extending, and the shape of protruding portions $P_i$ ($i = 1, 2, .. 6$) may be the same for all the protruding portions, or may be different for at least some of the protruding portions. The cross-sectional shape of each protruding portion $P_i$ is substantially trapezoidal in FIG. 7; however, cross-sectional shapes of the protruding portions $P_i$ may be various other shapes, such as a rectangular shape, a semicircular shape, a semi-elliptical shape, and a shape that combines a trapezoid and a semicircle having at least a part of the upper base of the trapezoid as the diameter thereof.

As with the first embodiment, the protruding portions $P_i$ are placed in six deviation angle ranges $[\theta_{1(2i-1)}, \theta_{1(2i)}]$ in a first cylindrical coordinate system in which a central axis $O_1$ of the opening portion 22 of the second member 20 serves as a z-axis (refer to FIG. 7 and Table 1).

A plurality of (12 in the present embodiment) recessed portions $Q_1$ to $Q_{12}$, which are recessed inward in the radial direction, are arranged in the circumferential direction in an outer side surface 14 that defines the base portion 12 of the first member 10. The recessed portions $Q_j$ (j = 1 to 12) extend in a direction parallel to a central axis $O_2$ of the base portion 12.

The recess depth of each recessed portion $Q_j$ in the radial direction with reference to the outer side surface 14, which defines the base portion 12 of the first member 10, and the protrusion amount of each protruding portion $P_i$ in the radial direction with reference to the inner side surface 24, which defines the opening portion 22 of the second member 20, are designed such that a distal end surface or a top surface of the protruding portion $P_i$ comes in contact with the bottom surface of the recessed portion $Q_j$ or moves apart from the bottom surface thereof when at least one entire protruding portion $P_i$ has entered in at least one recessed portion $Q_j$. For example, if the diameter of the base portion 12 of the first member 10 and the diameter of the opening portion 22 of the second member 20 are the same or substantially the same, then the recess depth of each recessed portion $Q_j$ in the radial direction is designed to be greater than the protrusion amount of each protruding portion $P_i$ in the radial direction. Although the cross-sectional shape of each recessed portion $Q_j$ illustrated in FIG. 6 is substantially trapezoidal, the recessed portion $Q_j$ may have various other cross-sectional shapes, such as a rectangular shape, a semicircular shape, a semi-elliptical shape, and a shape that combines a rectangle and a semicircle having at least a part of one side of the rectangle as the diameter thereof, insofar as the shape can accommodate the entire protruding portion $P_i$.

As with the first embodiment, the recessed portions $Q_j$ are placed in twelve deviation angle ranges $[\theta_{2(2j-1)}, \theta_{2(2j)}]$ in a second cylindrical coordinate system having a central axis $O_2$ of the base portion 12 of the first member 10 as a z-axis (refer to FIG. 6 and Table 3).

(Effect)

As with the first embodiment, when the base portion 12 of the first member 10 is press-fitted in the opening portion 22 of the second member 20, at least one entire protruding portion $P_i$ among the plurality of protruding portions $P_1$ to $P_6$ placed on the inner side surface 24 that defines the opening portion 22 can enter in at least one recessed portion $Q_j$ among the plurality of recessed portions $Q_i$ to $Q_{12}$ arranged in the outer side surface 14 of the base portion 12 without relatively positioning the base portion 12 and the opening portion 22 in the circumferential direction. This makes it possible to prevent the at least one protruding portion $P_i$ from deforming by being subjected to a pressure in the radial direction applied by the outer side surface 14 that defines the base portion 12. The displacement in the circumferential direction of the at least one protruding portion $P_i$ is restricted by both end faces in the circumferential direction of the at least one recessed portion $Q_j$, thus restricting the relative rotation of the base portion 12 of the first member 10 and the opening portion 22 of the second member 20.

Further, the remaining protruding portions $P_{i'}$ are pressed against the outer side surface 14, which defines the base portion 12, at least partly, thus preventing the base portion 12 of the first member 10 from slipping off of the opening portion 22 of the second member 20.

(Other embodiments of the present invention)

In the first and the second embodiments, $N_1=6$ and $N_2=12$. The combination of $N_1$ and $N_2$, however, may be changed in various ways as other embodiments, such as $(N_1, N_2) = (4, 6), (4, 8), (4, 12), (5, 12), (6, 6), (7, 10), (10, 12), (12, 6)$, and $(15, 8)$. Preferably, however, a combination of $N_1$ and $N_2$ is selected such that the number of the recessed portions is greater than the number of the protruding portions in order to decrease the deviation angle width of each recessed portion so as to consequently decrease the relative permissible rotational angle of a first member 10 and a second member 20.

For example, if $N_1=6$ and $N_2=15$, and a deviation angle width $\Delta_1$ of each protruding portion $P_i$ in a first cylindrical coordinate system is 5°, then a deviation angle width $\Delta_2$ of each recessed portion $Q_j$ in a second cylindrical coordinate system is 9° (refer to relational expression (12)).

As with the first and the second embodiments, the protruding portions $P_i$ are placed in the six deviation angle ranges $[\theta_{1(2i-1)}, \theta_{1(2i)}]$ in the first cylindrical coordinate system (refer to Table 1, FIG. 2 and FIG. 7).

In the present embodiment, a permutation $\sigma_1$ is defined by relational expression (141).

$$\sigma_1 : \{1, 2, 3, 4, 5, 6\} \rightarrow \{6, 3, 4, 2, 5, 1\} \quad .. (141)$$

Table 5 illustrates the corresponding relationship among "k," "i (k)," and "j (k)" in this case.

[Table 5]

| k | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| i(k) | 6 | 3 | 4 | 2 | 5 | 1 | 6 | 3 | 4 | 2 | 5 | 1 | 6 | 3 | 4 |
| i(k) | 13 | 5 | 8 | 3 | 11 | 1 | 14 | 6 | 9 | 4 | 12 | 2 | 15 | 7 | 10 |

Thus, as illustrated in Table 6, the recessed portions $Q_j$ are placed in the fifteen deviation angle ranges [$\theta_{2(2j-1)}$, $\theta_{2(2j)}$] in the second cylindrical coordinate system.

[Table 6]

| $Q_1$ | | $Q_2$ | | $Q_3$ | | $Q_4$ | | $Q_5$ | | $Q_6$ | |
|---|---|---|---|---|---|---|---|---|---|---|---|
| $\theta_{2(1)}$ | $\theta_{2(2)}$ | $\theta_{2(3)}$ | $\theta_{2(4)}$ | $\theta_{2(5)}$ | $\theta_{2(6)}$ | $\theta_{2(7)}$ | $\theta_{2(8)}$ | $\theta_{2(9)}$ | $\theta_{2(10)}$ | $\theta_{2(11)}$ | $\theta_{2(12)}$ |
| 24° | 33° | 48° | 57° | 76° | 85° | 100° | 109° | 128° | 137° | 152° | 161° |

| $Q_7$ | | $Q_8$ | | $Q_9$ | | $Q_{10}$ | | $Q_{11}$ | | $Q_{12}$ | |
|---|---|---|---|---|---|---|---|---|---|---|---|
| $\theta_{2(13)}$ | $\theta_{2(14)}$ | $\theta_{2(15)}$ | $\theta_{2(16)}$ | $\theta_{2(17)}$ | $\theta_{2(18)}$ | $\theta_{2(19)}$ | $\theta_{2(20)}$ | $\theta_{2(21)}$ | $\theta_{2(22)}$ | $\theta_{2(23)}$ | $\theta_{2(24)}$ |
| 176° | 185° | 192° | 201° | 216° | 225° | 240° | 249° | 260° | 269° | 284° | 293° |

| $Q_{13}$ | | $Q_{14}$ | | $Q_{15}$ | |
|---|---|---|---|---|---|
| $\theta_{2(25)}$ | $\theta_{2(26)}$ | $\theta_{2(27)}$ | $\theta_{2(28)}$ | $\theta_{2(29)}$ | $\theta_{2(30)}$ |
| 304° | 313° | 328° | 337° | 352° | 1° |

According to Table 5, a state S (k) (k = {(n - 1) mod $N_2$} + 1) is implemented if the relative rotational angle of the first cylindrical coordinate system and the second cylindrical coordinate system is in the range of (n -1) $\times$ ($\Delta_2$ - $\Delta_1$) ~ n $\times$ ($\Delta_2$ - $\Delta_1$) ($\Delta_2$ - $\Delta_1$ = 4°). As with the foregoing embodiments, the protruding portions $P_i$ are placed in the six-fold symmetrical manner, so that the sequence {1, 2, 3, 4, 5, 6} of an index i denoting each protruding portion $P_i$ is substituted by {6, 1, 2, 3, 4, 5} when the relative rotational angle of the first and the second cylindrical coordinate systems reaches a multiple of 60°, starting from a state S (0), and then the states S (1) to S (15) are implemented in that order.

Further, if $N_1$=6 and $N_2$=6, and the deviation angle width $\Delta_1$ of each protruding portion $P_i$ in the first cylindrical coordinate system is 5°, then the deviation angle width $\Delta_2$ of each recessed portion $Q_j$ in the second cylindrical coordinate system is 15° (refer to relational expression (12)). Table 7 illustrates the corresponding relationship among "k," "i (k)," and "j (k)" in this case.

[Table 7]

| k | 1 | 2 | 3 | 4 | 5 | 6 |
|---|---|---|---|---|---|---|
| i(k) | 6 | 3 | 4 | 2 | 5 | 1 |
| j(k) | 6 | 3 | 4 | 2 | 5 | 1 |

In this case, according to Table 7, a state S (k) (k = {(n - 1) mod $N_2$} + 1) is implemented if the relative rotational angle of the first cylindrical coordinate system and the second cylindrical coordinate system are in the range of (n -1) $\times$ ($\Delta_2$ - $\Delta_1$) ~ n $\times$ ($\Delta_2$ - $\Delta_1$) ($\Delta_2$ - $\Delta_1$ = 10°). As with the foregoing embodiments, the protruding portions $P_i$ are placed in the six-fold symmetrical manner, so that the sequence {1, 2, 3, 4, 5, 6} of the index i denoting each protruding portion $P_i$ is substituted by {6, 1, 2, 3, 4, 5} when the relative rotational angle of the first and the second cylindrical coordinate systems reaches a multiple of 60°, starting from a state S (0), and then the states S (1) to S (6) are implemented in that order.

Further, if $N_i$=5 and $N_2$=9, and the deviation angle width $\Delta_1$ of each protruding portion $P_i$ in the first cylindrical coordinate system is 5°, then the deviation angle width $\Delta_2$ of each recessed portion $Q_j$ in the second cylindrical coordinate system is 13° (refer to relational expression (12)). More specifically, the protruding portions $P_i$ are placed in the five deviation angle ranges $[\theta_{1(2i-1)}, \theta_{1(2i)}]$ in the first cylindrical coordinate system, as illustrated in Table 8.

[Table 8]

| P₁ | | P₂ | | P₃ | | P₄ | | P₅ | |
|---|---|---|---|---|---|---|---|---|---|
| $\theta_{1(1)}$ | $\theta_{1(2)}$ | $\theta_{1(3)}$ | $\theta_{1(4)}$ | $\theta_{1(5)}$ | $\theta_{1(6)}$ | $\theta_{1(7)}$ | $\theta_{1(8)}$ | $\theta_{1(9)}$ | $\theta_{1(10)}$ |
| 0° | 5° | 72° | 77° | 144° | 149° | 216° | 221° | 288° | 293° |

In the present embodiment, a permutation $\sigma_1$ is defined by relational expression (142).

$$\sigma_1 : \{1, 2, 3, 4, 5\} \rightarrow \{4, 1, 2, 5, 3\} \quad .. (142)$$

Table 9 illustrates the corresponding relationship among "k," "i (k)," and "j (k)" in this case.

[Table 9]

| k | 1 | 2 | 3 | 4 | 5 | 6 | 7 | 8 | 9 |
|---|---|---|---|---|---|---|---|---|---|
| i(k) | 4 | 1 | 2 | 5 | 3 | 4 | 1 | 2 | 5 |
| i(k) | 7 | 2 | 4 | 9 | 6 | 8 | 3 | 5 | 1 |

Thus, as illustrated in Table 10, the recessed portions $Q_j$ are placed in the nine deviation angle ranges $[\theta_{2(2j-1)}, \theta_{2(2j)}]$ in the second cylindrical coordinate system.

[Table 10]

| Q₁ | | Q₂ | | Q₃ | | Q₄ | | Q₅ | | Q₆ | |
|---|---|---|---|---|---|---|---|---|---|---|---|
| $\theta_{2(1)}$ | $\theta_{2(2)}$ | $\theta_{2(3)}$ | $\theta_{2(4)}$ | $\theta_{2(5)}$ | $\theta_{2(6)}$ | $\theta_{2(7)}$ | $\theta_{2(8)}$ | $\theta_{2(9)}$ | $\theta_{2(10)}$ | $\theta_{2(11)}$ | $\theta_{2(12)}$ |
| 0° | 13° | 16° | 29° | 56° | 69° | 96° | 109° | 136° | 149° | 184° | 197° |

| Q₇ | | Q₈ | | Q₉ | |
|---|---|---|---|---|---|
| $\theta_{2(13)}$ | $\theta_{2(14)}$ | $\theta_{2(15)}$ | $\theta_{2(16)}$ | $\theta_{2(17)}$ | $\theta_{2(18)}$ |
| 224° | 237° | 264° | 277° | 320° | 333° |

In this case, according to Table 9, the state S (k) (k = {(n - 1) mod N₂} + 1) is implemented if the relative rotational angle of the first cylindrical coordinate system and the second cylindrical coordinate system is in the range of (n - 1) × ($\Delta_2$ - $\Delta_1$) ~ n × ($\Delta_2$ - $\Delta_1$) ($\Delta_2$ - $\Delta_1$ = 8°). According to the present embodiment, the protruding portions $P_i$ are placed in a five-fold symmetrical manner, so that the sequence {1, 2, 3, 4, 5} of the index i denoting each protruding portion $P_i$ is substituted by {5, 1, 2, 3, 4} when the relative rotational angle of the first and the second cylindrical coordinate systems reaches a multiple of 72°, starting from the state S (0), and then the states S (1) to 5 (9) are implemented in that order.

The permutation $\sigma_1$ may be a map from a set into itself. As with the first and the second embodiments, the protruding portions $P_i$ are placed in the six deviation angle ranges $[\theta_{1(2i-1)}, \theta_{1(2i)}]$ in the first cylindrical coordinate system (refer to Table 1, FIG. 2 and FIG. 7). Table 11 illustrates the corresponding relationship among "k," "i (k)," and "j (k)" in the case where the permutation $\sigma_1$ is a map from a set into itself in the first and the second embodiments.

[Table 11]

| k | 1 | 2 | 3 | 4 | 5 | 6 | 7 | 8 | 9 | 10 | 11 | 12 |
|---|---|---|---|---|---|---|---|---|---|---|---|---|
| i(k) | 1 | 2 | 3 | 4 | 5 | 6 | 1 | 2 | 3 | 4 | 5 | 6 |
| j(k) | 1 | 3 | 5 | 7 | 9 | 11 | 2 | 4 | 6 | 8 | 10 | 12 |

Thus, as illustrated in Table 12, the recessed portions $Q_j$ are placed in the twelve deviation angle ranges [$\theta_{2(2j-1)}$, $\theta_{2(2j)}$] in the second cylindrical coordinate system.

[Table 12]

| $Q_1$ | | $Q_2$ | | $Q_3$ | | $Q_4$ | | $Q_5$ | | $Q_6$ | |
|---|---|---|---|---|---|---|---|---|---|---|---|
| $\theta_{2(1)}$ | $\theta_{2(2)}$ | $\theta_{2(3)}$ | $\theta_{2(4)}$ | $\theta_{2(5)}$ | $\theta_{2(6)}$ | $\theta_{2(7)}$ | $\theta_{2(8)}$ | $\theta_{2(9)}$ | $\theta_{2(10)}$ | $\theta_{2(11)}$ | $\theta_{2(12)}$ |
| 5° | 15° | 35° | 45° | 70° | 80° | 100° | 110° | 135° | 145° | 165° | 175° |
| $Q_7$ | | $Q_8$ | | $Q_9$ | | $Q_{10}$ | | $Q_{11}$ | | $Q_{12}$ | |
| $\theta_{2(13)}$ | $\theta_{2(14)}$ | $\theta_{2(15)}$ | $\theta_{2(16)}$ | $\theta_{2(17)}$ | $\theta_{2(18)}$ | $\theta_{2(19)}$ | $\theta_{2(20)}$ | $\theta_{2(21)}$ | $\theta_{2(22)}$ | $\theta_{2(23)}$ | $\theta_{2(24)}$ |
| 200° | 210° | 230° | 240° | 265° | 275° | 295° | 305° | 330° | 340° | 360° | 10° |

As is obvious from Table 12, the two recessed portions $Q_1$ and $Q_{12}$ partly overlap to constitute one recessed portion, so that there are eleven separate recessed portions in appearance. Conceptually, however, there are twelve recessed portions $Q_1$ to $Q_{12}$. The deviation angles in the second cylindrical coordinate system that indicate the thickness in the circumferential direction of each of the eleven partition portions separating the apparent eleven recessed portions are as follows: 20° ($Q_1 \Leftrightarrow Q_2$), 25° ($Q_2 \Leftrightarrow Q_3$), 20° ($Q_3 \Leftrightarrow Q_4$), 25° ($Q_4 \Leftrightarrow Q_5$), 20° ($Q_5 \Leftrightarrow Q_6$), 25° ($Q_6 \Leftrightarrow Q_7$), 20° ($Q_7 \Leftrightarrow Q_8$), 25° ($Q_8 \Leftrightarrow Q_9$), 20° ($Q_9 \Leftrightarrow Q_{10}$), 25° ($Q_{10} \Leftrightarrow Q_{11}$), and 20° ($Q_{11} \Leftrightarrow Q_{12}$). The mean value of the deviation angles is 22.3° and the variance is 6.2°.

Thus, the uniformity of the thickness of the partition portions in the circumferential direction has increased, as compared with the first and the second embodiments in which the variance is 37.5°. In the situation in which an entire protruding portion $P_i$ is included in one recessed portion constituted by the two partly overlapping recessed portions $Q_1$ and $Q_{12}$, the relative rotation of the first member 10 and the second member 20 is allowed for a difference of 10° between the width in the circumferential direction of the foregoing one recessed portion (= 15°) and the width in the circumferential direction of the foregoing protruding portion $P_i$ (= 5°).

In order to avoid the overlapping of the recessed portions $Q_1$ and $Q_{12}$, the recessed portion $Q_{12}$ may be placed by shifting the deviation angle by a multiple of 60° (= 360° / $N_1$), specifically, by 120° (between the recessed portions $Q_4$ and $Q_5$) so as to prevent the recessed portion $Q_{12}$ from overlapping other recessed portions $Q_2$ to $Q_{11}$.

As a modified embodiment of the first embodiment, an $N_2$ number of recessed portions $Q_j$ may be provided in a second member 20 such that the $N_2$ number of recessed portions $Q_j$ have a rotational symmetry in a second cylindrical coordinate system, and an $N_1$ number of protruding portions $P_i$ may be provided on a first member 10 such that the $N_1$ number of protruding portions $P_i$ do not have the rotational symmetry in a first cylindrical coordinate system.

More specifically, the $N_2$ number of recessed portions $Q_j$ are placed such that each of the $N_2$ number of recessed portions $Q_j$ has a deviation angle width $\Delta_2$ and the $N_2$ number of recessed portions $Q_j$ have an $N_2$-fold symmetry as the rotational symmetry about the z-axis in the second cylindrical coordinate system. In the first cylindrical coordinate system, each of the $N_1$ number of protruding portions $P_i$ is placed in the deviation angle range having a deviation angle width $\Delta_1$ denoted by relational expression (22) with reference to a deviation angle $\theta_1$ (k) denoted by relational expression (21).

$$\theta_1 (k) = (i (k) - 1) \times 360° / N_2 + k \times (\Delta_2 - \Delta_1) \ .. \ (21)$$

$$\Delta_1 = \Delta_2 - \{\varepsilon (k) + 360° / (N_1 \cdot N_2)\} \ (\varepsilon (k) \geq 0) \ .. \ (22)$$

According to a mating mechanism 1 of the modified embodiment, in a second member 20, even if the $N_2$ number of recessed portions are arranged in the circumferential direction in the inner side surface, which defines the opening portion, such that the $N_2$ number of recessed portions have an $N_2$-fold symmetry as the rotational symmetry about the z-axis, a base portion 12 of a first member 10 can be mated with an opening portion 22 of the second member 20 in a state, in which at least one entire protruding portion $P_i$ has entered in at least one recessed portion $Q_j$, without the need for the relative positioning of the opening portion 22 of the second member 20 and the base portion 12 of the first member 10 in the circumferential direction.

As a modified embodiment of the second embodiment, an $N_2$ number of recessed portions $Q_j$ may be provided in a first member such that the $N_2$ number of recessed portions $Q_j$ have a rotational symmetry in a second cylindrical coordinate system, and an $N_1$ number of protruding portions $P_i$ may be provided on a second member 20 such that the $N_1$ number of protruding portions $P_i$ do not have a rotational symmetry in a first cylindrical coordinate system.

More specifically, the $N_2$ number of recessed portions $Q_j$ are placed in the circumferential direction in an outer side surface 14, which defines a base portion 12 of a first member 10, such that each of the $N_2$ number of recessed portions $Q_j$ has a deviation angle width $\Delta_2$ and the $N_2$ number of recessed portions $Q_j$ have an $N_2$-fold symmetry as the rotational symmetry about the z-axis in the second cylindrical coordinate system. In the first cylindrical coordinate system, each of the $N_1$ number of protruding portions $P_i$ is placed in a deviation angle range having a deviation angle width $\Delta_1$ denoted by relational expression (22) with reference to a deviation angle $\theta_1$ (k) denoted by relational expression (21).

According to a mating mechanism 1 of the modified embodiment, in a first member 10, even if the $N_2$ number of recessed portions $Q_j$ are arranged in the circumferential direction in the outer side surface 14, which defines the base portion 12, such that the $N_2$ number of recessed portions $Q_j$ have the $N_2$-fold symmetry as the rotational symmetry about the z-axis, the base portion 12 of the first member 10 can be mated with an opening portion 22 of the second member 20 in a state, in which at least one entire protruding portion $P_i$ has entered in at least one recessed portion $Q_j$, without the need for the relative positioning of the opening portion 22 of the second member 20 and the base portion 12 of the first member 10 in the circumferential direction.

Further, an $N_1$ number of protruding portions $P_i$ may be provided on the first member 10 or the second member 20 such that the $N_1$ number of protruding portions $P_i$ do not have a rotational symmetry in a first cylindrical coordinate system, and an $N_2$ number of recessed portions $Q_j$ may be provided in the second member 20 or the first member 10 such that the $N_2$ number of recessed portions $Q_j$ do not have the rotational symmetry in the second cylindrical coordinate system.

In this case also, on an arbitrary k, the state $S^-$ (k+1) is implemented by the time a state $S^-$ (k) transitions to a state $S^+$ (k) in the course of relatively rotating the first cylindrical coordinate system and the second cylindrical coordinate system with the z-axes thereof made to coincide with each other. Thus, the base portion 12 of the first member 10 can be mated with the opening portion 22 of the second member 20 in a state, in which at least one entire protruding portion $P_i$ has entered in at least one recessed portion $Q_j$, without the need for the relative positioning of the opening portion 22 of the second member 20 and the base portion 12 of the first member 10 in the circumferential direction.

In the foregoing embodiments, the number of the protruding portions $P_i$ may be greater than $N_1$, and in place of or in addition thereto, the number of the recessed portions $Q_j$ may be greater than $N_2$. In this case, the number of the protruding portions that entirely enter in or are accommodated in the recessed portions when the base portion 12 is mated with or inserted in the opening portion 22 increases, thus making it possible to securely prevent the relative rotation of the first member 10 and the second member 20.

Description of Reference Numerals

1 .. mating mechanism; 10 .. first member; 12 .. base portion; 14 .. outer side surface; 20 .. second member; 22 .. opening portion; 24 .. inner side surface; $P_i$: protruding portion; and $Q_j$: recessed portion.

**Claims**

1. A mating mechanism (1) comprising: a first member (10) having a base portion (14) defined by an outer side surface (14) that has a plurality $N_1$ of protruding portions $P_i$ (i = 1, 2, .., $N_1$) which are arranged in a circumferential direction and which project outward in a radial direction; and a second member (20) having an opening portion (22) defined by an inner side surface (24) that has a plurality $N_2$ of recessed portions $Q_j$ (j = 1, 2, .., $N_2$) which are arranged along a circumferential direction and which are recessed outward in a radial direction, and wherein $N_2 \geq N_1$,

    wherein each of the plurality $N_1$ of the protruding portions $P_i$ is placed in a deviation angle range $[\theta_{1(2i-1)}, \theta_{1(2i)}]$ (i = 1, 2, .., $N_1$) in a first cylindrical coordinate system in which a central axis $O_1$ of the base portion (14) of the first member (1) serves as a z-axis,
    wherein each of the plurality $N_2$ of the recessed portions $Q_j$ is placed in a deviation angle range $[\theta_{2(2j-1)}, \theta_{2(2j)}]$ (j = 1, 2, .., $N_2$) in a second cylindrical coordinate system in which a central axis $O_2$ of the opening portion (22) of the second member (2) serves as a z-axis,
    wherein i (k) (k = 1, 2, .. $N_1$) is defined as $\sigma_1(\{(k - 1) \mod N_1\}+1)$ by using a bijection $\sigma_1$ of a sequence {1, 2, .. $N_1$}, and j(k) (k = 1, 2, .. $N_2$) is defined as $\sigma_2(\{(k - 1) \mod N_2\}+1)$ by using a bijection $\sigma_2$ of a sequence {1, 2, .. $N_2$}, and
    the plurality $N_1$ of protruding portions $P_i$ are arranged on the outer side surface (14) of the base portion (12) and the plurality $N_2$ of recessed portions $Q_j$ are arranged on the inner side surface (24) of the opening portion (22) such that, for an arbitrary k, a state $S^-$ (k+1) is implemented by a time a state $S^-$ (k), in which $\theta_{1(2i(k)-1)} = \theta_{2(2j(k)-1)}$ and $\theta_{1(2i(k))} < \theta_{2(2j(k))}$, transitions to a state $S^+$ (k), in which $\theta_{2(2j(k)-1)} < \theta_{1(2i(k)-1)}$ and $\theta_{1(2i(k))} = \theta_{2(2j(k))}$, in a course of relatively rotating the first cylindrical coordinate system and the second cylindrical coordinate system with the z-axes thereof made to coincide with each other,
wherein the plurality $N_1$ of protruding portions $P_i$ are arranged in the circumferential direction on the outer side surface (14), which defines the base portion (12), such that each of the plurality $N_1$ of protruding portions $P_i$ has a deviation angle width $\Delta_1$ and the plurality $N_1$ of protruding portions $P_i$ have an $N_1$-fold symmetry as a rotational symmetry about the z-axis in the first cylindrical coordinate system, and each of the plurality $N_2$ of recessed portions $Q_j$ is placed in the deviation angle range that has a deviation angle width $\Delta_2 = \Delta_1 + \varepsilon (k) + 360° / (N_1 \cdot N_2)$ ($\varepsilon (k) \geq 0$) with reference to a deviation angle $\theta_2 (k) = (i (k) - 1) \times 360° / N) + k \times (\Delta_2 - \Delta_1)$ in the second cylindrical coordinate system, or,
wherein the plurality $N_2$ of recessed portions $Q_j$ are arranged in the circumferential direction in the inner side surface (24), which defines the opening portion (22), such that each of the plurality $N_2$ of recessed portions $Q_j$ has a deviation angle width $\Delta_2$ and the plurality $N_2$ of recessed portions $Q_j$ have an $N_2$-fold symmetry as the rotational symmetry about the z-axis in the second cylindrical coordinate system, and each of the plurality $N_1$ of protruding portions $P_i$ is placed in the deviation angle range that has a deviation angle width $\Delta_1 = \Delta_2 - \{\varepsilon (k) + 360° / (N_1 \cdot N_2)\}$ ($\varepsilon (k) \geq 0$) with reference to a deviation angle $\theta_1 (k) = (i (k) - 1) \times 360° / N_2 + k \times (\Delta_2 - \Delta_1)$ in the first cylindrical coordinate system.

2. The mating mechanism (1) according to claim 1,
wherein the plurality $N_1$ of protruding portions $P_i$ are arranged on the outer side surface (14) of the base portion (12) and the plurality $N_2$ of recessed portions $Q_j$ are arranged in the inner side surface (24) of the opening portion (22) such that the state $S^+ (k)$ and the state $S^- (k+1)$ are simultaneously implemented in the course of relatively rotating the first cylindrical coordinate system and the second cylindrical coordinate system with the z-axes thereof made to coincide with each other.

3. A mating mechanism (1) comprising: a first member (10) having a base portion (14) defined by an outer side surface (14) that has a plurality $N_2$ of recessed portions $Q_j$ ($j = 1, 2, .., N_2$) which are arranged in a circumferential direction and which are recessed inward in a radial direction, and a second member (20) having an opening portion (22) defined by an inner side surface (24) that has a plurality $N_1$ of protruding portions $P_i$ ($i = 1, 2, .., N_1$) which are arranged along a circumferential direction and which project inward in a radial direction, and wherein $N_2 \geq N_1$,

wherein each of at the plurality $N_1$ of the protruding portions P; is placed in a deviation angle range $[\theta_{1(2i-1)}, \theta_{1(2i)}]$ ($i = 1, 2, .., N_1$) in a first cylindrical coordinate system in which a central axis $O_1$ of the opening portion (22) of the second member (2) serves as a z-axis,
wherein each of the plurality $N_2$ of the recessed portions $Q_j$ is placed in a deviation angle range $[\theta_{2(2j-1)}, \theta_{2(2j)}]$ ($j = 1, 2, .., N_2$) in a second cylindrical coordinate system in which a central axis $O_2$ of the base portion (14) of the first member (1) serves as a z-axis,
wherein i (k) ($k = 1, 2, .. N_1$) is defined as $\sigma_1(\{(k - 1) \bmod N_1\}+1)$ by using a bijection $\sigma_1$ of a sequence $\{1, 2, .. N_1\}$, and j(k) ($k = 1, 2, .. N_2$) is defined as $\sigma_2(\{(k - 1) \bmod N_2\}+1)$ by using a bijection $\sigma_2$ of a sequence $\{1, 2, .. N_2\}$, and
the plurality $N_2$ of recessed portions Qj are arranged in the outer side surface (14) of the base portion (12) and the plurality $N_1$ of protruding portions $P_i$ are arranged on the inner side surface (24) of the opening portion (22) such that, for an arbitrary k, a state $S^- (k+1)$ is implemented by a time a state $S^- (k)$, in which $\theta_{1(2i(k)-1)} = 0_{2(2j(k)-1)}$ and $\theta_{1(2i(k))} < \theta_{2(2j(k))}$, transitions to a state $S^+ (k)$, in which $\theta_{2(2j(k)-1)} < \theta_{1(2i(k)-1)}$ and $\theta_{1(2i(k))} = \theta_{2(2j(k))}$ in a course of relatively rotating the first cylindrical coordinate system and the second cylindrical coordinate system with the z-axes thereof made to coincide with each other,
wherein the plurality $N_1$ of protruding portions $P_i$ are arranged in the circumferential direction on the inner side surface (24), which defines the opening portion (22), such that each of the plurality $N_1$ of protruding portions $P_i$ has a deviation angle width $\Delta_1$ and the plurality $N_1$ of protruding portions $P_i$ have an $N_1$-fold symmetry as a rotational symmetry about the z-axis in the first cylindrical coordinate system, and each of the plurality $N_2$ number of recessed portions $Q_j$ is placed in a deviation angle range that has a deviation angle width $\Delta_2 = \Delta_1 + \varepsilon (k) + 360° / (N_1 \cdot N_2)$ ($\varepsilon (k) \geq 0$) with reference to a deviation angle $\theta_2 (k) = (i (k) - 1) \times 360° / N_1 + k \times (\Delta_2 - \Delta_1)$ in the second cylindrical coordinate system, or
wherein the plurality $N_2$ of recessed portions $Q_j$ are arranged in the circumferential direction in the outer side surface (14), which defines the base portion (12), such that each of the plurality $N_2$ of recessed portions $Q_j$ has a deviation angle width $\Delta_2$ and the plurality $N_2$ of recessed portions $Q_j$ have an $N_2$-fold symmetry as a rotational symmetry about the z-axis in the second cylindrical coordinate system, and each of the plurality $N_1$ of protruding portions $P_i$ is placed in a deviation angle range that has a deviation angle width $\Delta_1 = \Delta_2 - \{\varepsilon (k) + 360° / (N_1 \cdot N_2)\}$ ($\varepsilon (k) \geq 0$) with reference to a deviation angle $\theta_1 (k) = (i (k) - 1) \times 360° / N_2 + k \times (\Delta_2 - \Delta_1)$ in the first cylindrical coordinate system.

**4.** The mating mechanism (1) according to claim 3,
wherein the plurality $N_2$ of recessed portions $Q_j$ are arranged in the outer side surface (14) of the base portion (12) and the plurality $N_1$ of protruding portions $P_i$ are arranged on the inner side surface (24) of the opening portion (22) such that the state $S^+(k)$ and the state $S^-(k+1)$ are simultaneously implemented in the course of relatively rotating the first cylindrical coordinate system and the second cylindrical coordinate system with the z-axes thereof made to coincide with each other.


**Patentansprüche**

**1.** Passmechanismus (1), umfassend: ein erstes Element (10), das einen Basisabschnitt (14) aufweist, der durch eine Außenseitenfläche (14) definiert ist, die eine Mehrzahl $N_1$ von vorspringenden Abschnitten $P_i$ (i = 1, 2, ..., $N_1$) aufweist, die in Umfangsrichtung angeordnet sind und die in Radialrichtung nach außen vorspringen, und ein zweites Element (20), das einen Öffnungsabschnitt (22) aufweist, der durch eine Innenseitenfläche (24) definiert ist, die eine Mehrzahl $N_2$ von zurückspringenden Abschnitten $Q_j$ (j = 1, 2, ..., $N_2$) aufweist, die entlang einer Umfangsrichtung angeordnet sind und die in Radialrichtung nach außen zurückspringen, und wobei $N_2 \geq N_1$,

wobei jeder aus der Mehrzahl $N_1$ der vorspringenden Abschnitte $P_i$ in einem Abweichungswinkelbereich [$\theta_{1(2i-1)}$, $\theta_{1(2i)}$] (i = 1, 2, ..., $N_1$) in einem ersten zylindrischen Koordinatensystem angeordnet ist, in dem eine Mittelachse $O_1$ des Basisabschnitts (14) des ersten Elements (1) als eine z-Achse dient,
wobei jeder aus der Mehrzahl $N_2$ der zurückspringenden Abschnitte $Q_j$ in einem Abweichungswinkelbereich [$\theta_{2(2j-1)}$, $\theta_{2(2j)}$] (j = 1, 2, ..., $N_2$) in einem zweiten zylindrischen Koordinatensystem angeordnet ist, in dem eine Mittelachse $O_2$ des Öffnungsabschnitts (22) des zweiten Elements (2) als eine z-Achse dient,
wobei i(k) (k = 1, 2, ..., $N_1$) unter Verwendung einer Bijektion $\sigma_1$ einer Sequenz {1, 2, ..., $N_1$} als $\sigma_1$({(k - 1) mod $N_1$} + 1) definiert ist, und j(k) (k = 1, 2, ..., $N_2$) unter Verwendung einer Bijektion $\sigma_2$ einer Sequenz {1, 2, ..., $N_2$} als $\sigma_2$ ({(k - 1) mod $N_2$} + 1) definiert ist, und
die Mehrzahl $N_1$ der vorspringenden Abschnitte $P_i$ auf der Außenseitenfläche (14) des Basisabschnitts (12) so angeordnet ist und die Mehrzahl $N_2$ der zurückspringenden Abschnitte $Q_j$ auf der Innenseitenfläche (24) des Öffnungsabschnitts (22) so angeordnet ist, dass, für ein beliebiges k, ein Zustand $S^-(k+1)$ innerhalb einer Zeitdauer implementiert wird, in welcher ein Zustand $S^-(k)$, in dem $\theta_{1(2i(k)-1)} = \theta_{2(2j(k)-1)}$ und $\theta_{1(2i(k))} < \theta_{2(2j(k))}$, in einen Zustand $S^+(k)$, in dem $\theta_{2(2j(k)-1)} < \theta_{1(2i(k)-1)}$ und $\theta_{1(2i(k))} = \theta_{2(2j(k))}$, im Verlauf einer relativen Rotation des ersten zylindrischen Koordinatensystems und des zweiten zylindrischen Koordinatensystems, bei welcher ihre z-Achsen miteinander übereinstimmen, übergeht,
wobei die Mehrzahl $N_1$ der vorspringenden Abschnitte $P_i$ in Umfangsrichtung auf der Außenseitenfläche (14), die den Basisabschnitt (12) definiert, so angeordnet ist, dass jeder aus der Mehrzahl $N_1$ der vorspringenden Abschnitte $P_i$ eine Abweichungswinkelbreite $\Delta_1$ aufweist und die Mehrzahl $N_1$ der vorspringenden Abschnitte $P_i$ eine $N_1$-fache Symmetrie als eine Rotationssymmetrie um die z-Achse im ersten zylindrischen Koordinatensystem aufweist, und jeder aus der Mehrzahl $N_2$ der zurückspringenden Abschnitte $Q_j$ im Abweichungswinkelbereich angeordnet ist, der eine Abweichungswinkelbreite $\Delta_2 = \Delta_1 + \varepsilon(k) + 360° / (N_1 \cdot N_2)$ ($\varepsilon(k) \geq 0$) in Bezug auf einen Abweichungswinkel $\theta_2(k) = (i(k) - 1) \times 360° / N_1 + k \times (\Delta_2 - \Delta_1)$ im zweiten zylindrischen Koordinatensystem aufweist, oder
wobei die Mehrzahl $N_2$ der zurückspringenden Abschnitte $Q_j$ in Umfangsrichtung auf der Innenseitenfläche (24), die den Öffnungsabschnitt (22) definiert, so angeordnet ist, dass jeder aus der Mehrzahl $N_2$ der zurückspringenden Abschnitte $Q_j$ eine Abweichungswinkelbreite $\Delta_2$ aufweist und die Mehrzahl $N_2$ der zurückspringenden Abschnitte $Q_j$ eine $N_2$-fache Symmetrie als die Rotationssymmetrie um die z-Achse im zweiten zylindrischen Koordinatensystem aufweist, und jeder aus der Mehrzahl $N_1$ der vorspringenden Abschnitte $P_i$ im Abweichungswinkelbereich angeordnet ist, der eine Abweichungswinkelbreite $\Delta_1 = \Delta_2 - \{\varepsilon(k) + 360° / (N_1 N_2)\}$ ($\varepsilon(k) \geq 0$) in Bezug auf einen Abweichungswinkel $\theta_1(k) = (i(k) - 1) \times 360° / N_2 + k \times (\Delta_2 - \Delta_1)$ im ersten zylindrischen Koordinatensystem aufweist.


**2.** Passmechanismus (1) nach Anspruch 1,
wobei die Mehrzahl $N_1$ der vorspringenden Abschnitte $P_i$ auf der Außenseitenfläche (14) des Basisabschnitts (12) so angeordnet ist und die Mehrzahl $N_2$ der zurückspringenden Abschnitte $Q_j$ auf der Innenseitenfläche (24) des Öffnungsabschnitts (22) so angeordnet ist, dass der Zustand $S^+(k)$ und der Zustand $S^-(k+1)$ im Verlauf einer relativen Rotation des ersten zylindrischen Koordinatensystems und des zweiten zylindrischen Koordinatensystems, bei welcher ihre z-Achsen miteinander übereinstimmen, gleichzeitig implementiert werden.

**3.** Passmechanismus (1), umfassend: ein erstes Element (10), das einen Basisabschnitt (14) aufweist, der durch eine Außenseitenfläche (14) definiert ist, die eine Mehrzahl $N_2$ von zurückspringenden Abschnitten $Q_j$ (j = 1, 2, ..., $N_2$) aufweist, die in Umfangsrichtung angeordnet sind und die in Radialrichtung nach innen zurückspringend sind, und ein zweites Element (20), das einen Öffnungsabschnitt (22) aufweist, der durch eine Innenseitenfläche (24) definiert ist, die eine Mehrzahl $N_1$ von vorspringenden Abschnitten $P_i$ (i = 1, 2, ..., $N_1$) aufweist, die entlang einer Umfangsrichtung angeordnet sind und die in Radialrichtung nach innen vorspringen, und wobei $N_2 \geq N_1$,

wobei jeder aus der Mehrzahl $N_1$ der vorspringenden Abschnitte $P_i$ in einem Abweichungswinkelbereich [$\theta_{1(21-1)}$, $\theta_{1(2i)}$] (i = 1, 2, ..., $N_1$) in einem ersten zylindrischen Koordinatensystem angeordnet ist, in dem eine Mittelachse $O_1$ des Öffnungsabschnitts (22) des zweiten Elements (2) als eine z-Achse dient,

wobei jeder aus der Mehrzahl $N_2$ der zurückspringenden Abschnitte $Q_j$ in einem Abweichungswinkelbereich [$\theta_{2(2j-1)}$, $\theta_{2(2j)}$] (j = 1, 2, ..., $N_2$) in einem zweiten zylindrischen Koordinatensystem angeordnet ist, in dem eine Mittelachse $O_2$ des Basisabschnitts (14) des ersten Elements (1) als eine z-Achse dient,

wobei i(k) (k = 1, 2, ..., $N_1$) unter Verwendung einer Bijektion $\sigma_1$ einer Sequenz {1, 2, ..., $N_1$} als $\sigma_1$({(k - 1) mod $N_1$} + 1) definiert ist, und j (k) (k = 1, 2, ..., $N_2$} unter Verwendung einer Bijektion $\sigma_2$ einer Sequenz {1, 2, ..., $N_2$} als $\sigma_2$({(k - 1) mod $N_2$} + 1) definiert ist, und

die Mehrzahl $N_2$ der zurückspringenden Abschnitte $Q_j$ auf der Außenseitenfläche (14) des Basisabschnitts (12) so angeordnet ist und die Mehrzahl $N_1$ der vorspringenden Abschnitte $P_i$ auf der Innenseitenfläche (24) des Öffnungsabschnitts (22) so angeordnet ist, dass, für ein beliebiges k, ein Zustand $S^-$(k+1) innerhalb einer Zeitdauer implementiert wird, in der ein Zustand $S^-$(k), in dem $\theta_{1(2i(k)-1)} = \theta_{1(2j(k)-1)}$ und $\theta_{1(2i(k))} < \theta_{2(2j(k))}$, in einen Zustand $S^+$(k), in dem $\theta_{2(2j(k)-1)} < \theta_{1(2i(k)-1)}$ und $\theta_{1(2i(k))} = \theta_{2(2j(k))}$, im Verlauf einer relativen Rotation des ersten zylindrischen Koordinatensystems und des zweiten zylindrischen Koordinatensystems, bei welcher ihre z-Achsen miteinander übereinstimmen, übergeht,

wobei die Mehrzahl $N_1$ der vorspringenden Abschnitte $P_i$ in Umfangsrichtung auf der Innenseitenfläche (24), die den Öffnungsabschnitt (22) definiert, so angeordnet ist, dass jeder aus der Mehrzahl $N_1$ der vorspringenden Abschnitte $P_i$ eine Abweichungswinkelbreite $\Delta_1$ aufweist und die Mehrzahl $N_1$ der vorspringenden Abschnitte $P_i$ eine $N_1$-fache Symmetrie als eine Rotationssymmetrie um die z-Achse im ersten zylindrischen Koordinatensystem aufweist, und jeder aus der Mehrzahl der $N_2$-Anzahl der zurückspringenden Abschnitte $Q_j$ in einem Abweichungswinkelbereich angeordnet ist, der eine Abweichungswinkelbreite $\Delta_2 = \Delta_1 + \varepsilon(k) + 360° / (N_1 \cdot N_2)$ ($\varepsilon(k) \geq 0$) in Bezug auf einen Abweichungswinkel $\theta_2(k) = (i(k) - 1) \times 360° / N_1 + k \times (\Delta_2 - \Delta_1)$ im zweiten zylindrischen Koordinatensystem aufweist, oder

wobei die Mehrzahl $N_2$ der zurückspringenden Abschnitte $Q_j$ in Umfangsrichtung auf der Außenseitenfläche (14), die den Basisabschnitt (12) definiert, so angeordnet ist, dass jeder aus der Mehrzahl $N_2$ der zurücksprin-genden Abschnitte $Q_j$ eine Abweichungswinkelbreite $\Delta_2$ aufweist und die Mehrzahl $N_2$ der zurückspringenden Abschnitte $Q_j$ eine $N_2$-fache Symmetrie als eine Rotationssymmetrie um die z-Achse im zweiten zylindrischen Koordinatensystem aufweist, und jeder aus der Mehrzahl $N_1$ der vorspringenden Abschnitte $P_i$ in einem Ab-weichungswinkelbereich angeordnet ist, der eine Abweichungswinkelbreite $\Delta_1 = \Delta_2 - \{\varepsilon(k) + 360° / (N_1 \cdot N_2)\}$ ($\varepsilon(k) \geq 0$) in Bezug auf einen Abweichungswinkel $\theta_1(k) = (i(k) - 1) \times 360° / N_2 + k \times (\Delta_2 - \Delta_1)$ im ersten zylindrischen Koordinatensystem aufweist.

4. Passmechanismus (1) nach Anspruch 3,
wobei die Mehrzahl $N_2$ der zurückspringenden Abschnitte $Q_j$ auf der Außenseitenfläche (14) des Basisabschnitts (12) so angeordnet ist und die Mehrzahl $N_1$ der vorspringenden Abschnitte $P_i$ auf der Innenseitenfläche (24) des Öffnungsabschnitts (22) so angeordnet ist, dass der Zustand $S^+$(k) und der Zustand $S^-$(k+1) im Verlauf einer relativen Rotation des ersten zylindrischen Koordinatensystems und des zweiten zylindrischen Koordinatensystems, bei welcher ihre z-Achsen miteinander übereinstimmen, gleichzeitig implementiert werden.

## Revendications

1. Mécanisme d'accouplement (1) comprenant : un premier élément (10) ayant une partie de base (14) définie par une surface latérale extérieure (14) qui a une pluralité $N_1$ de parties saillantes $P_i$ (i = 1, 2, ..., $N_1$) qui sont disposées dans une direction circonférentielle et qui saillent vers l'extérieur dans une direction radiale ; et un deuxième élément (20) ayant une partie d'ouverture (22) définie par une surface latérale intérieure (24) qui a une pluralité $N_2$ de parties en retrait $Q_j$ (j= 1, 2, . . , $N_2$) qui sont disposées le long d'une direction circonférentielle et qui sont en retrait vers l'extérieur dans une direction radiale, et où $N_2 \geq N_1$,

où chacune des parties saillantes $P_i$ de la pluralité $N_1$ est placée dans une plage d'angle de déviation [$\Theta_{1(2i-1)}$, $\Theta_{1(2i)}$] (i = 1, 2, ..., $N_1$) dans un premier système de coordonnées cylindriques dans lequel un axe central $O_1$

de la partie de base (14) du premier élément (1) sert d'axe z,

où chacune des parties en retrait $Q_j$ de la pluralité $N_2$ est placée dans une plage d'angles de déviation [$\Theta_{2(2j-1)}$, $\Theta_{2(2j)}$] (j = 1, 2, ..., $N_2$) dans un deuxième système de coordonnées cylindriques dans lequel un axe central $O_2$ de la partie d'ouverture (22) du deuxième élément (2) sert d'axe z,

où i(k) (k = 1, 2, ... $N_1$) est défini comme $\sigma_1$({(k - 1) mod N1} + 1) en utilisant une bijection $\sigma_1$ d'une séquence {1, 2, .. $N_1$}, et j(k) (k = 1, 2, .. $N_2$) est défini comme $\sigma_2$({(k - 1) mod $N_2$} + 1) en utilisant une bijection $\sigma_2$ d'une séquence {1, 2, .... $N_2$}, et

où les parties saillantes $P_i$ de la pluralité $N_1$ sont disposées sur la surface latérale extérieure (14) de la partie de base (12) et les parties en retrait Qj de la pluralité $N_2$ sont disposées sur la surface latérale intérieure (24) de la partie d'ouverture (22) de sorte que, pour un k arbitraire, un état $S^-(k+1)$ est mis en oeuvre au moment où un état $S^-(k)$, dans lequel $\Theta_{1(2i(k)-1)} = \Theta_{2(2j(k)-1)}$ et $\Theta_{1(2i(k))} < \Theta_{2(2j(k))}$, passe à un état $S^+(k)$, dans lequel $\Theta_{2(2j(k)-1)} < \Theta_{1(2i(k)-1)}$ et $\Theta_{1(2i(k))} = \Theta_{2(2j(k))}$ au cours d'une rotation relative du premier système de coordonnées cylindriques et du second système de coordonnées cylindriques avec leurs axes z coïncidant l'un avec l'autre,

où les parties saillantes $P_i$ de la pluralité $N_1$ sont disposées dans la direction circonférentielle sur la surface latérale extérieure (14) qui définit la partie de base (12), de sorte que chacune des parties saillantes $P_i$ de la pluralité $N_1$ a une largeur d'angle de déviation $\Delta_1$, et les parties saillantes P, de la pluralité $N_1$ présentent une symétrie d'ordre $N_1$ en tant que symétrie de rotation autour de l'axe z dans le premier système de coordonnées cylindriques, et chacune des parties en retrait $Q_j$ de la pluralité $N_2$ est placée dans la plage d'angle de déviation qui a une largeur d'angle de déviation $\Delta_2 = \Delta_1 + \varepsilon(k) + 360° / (N_1 \cdot N_2)$ ($\varepsilon(k) \geq 0$) en référence à un angle de déviation $\Theta_2(k) = (i(k) -1) \times 360° / N_1 + k \times (\Delta_2 - \Delta_1)$ dans le second système de coordonnées cylindriques, ou,

où les parties en retrait $Q_j$ de la pluralité $N_2$ sont disposées dans la direction circonférentielle dans la surface latérale intérieure (24) qui définit la partie d'ouverture (22), de sorte que chacune des parties en retrait $Q_j$ de la pluralité $N_2$ a une largeur d'angle de déviation $\Delta_2$, et les parties en retrait $Q_j$ de la pluralité $N_2$ présentent une symétrie d'ordre $N_2$ en tant que symétrie de rotation autour de l'axe z dans le second système de coordonnées cylindriques, et chacune des parties saillantes $P_i$ de la pluralité $N_1$ est placée dans la plage d'angle de déviation qui a une largeur d'angle de déviation $\Delta_1 = \Delta_2 - \{\varepsilon(k) + 360° / (N_1 \cdot N_2)\}$ ($\varepsilon(k) \geq 0$) en référence à un angle de déviation $\Theta_1(k) = (i(k) - 1) \times 360° / N_2 + k \times (\Delta_2 - \Delta_1)$ dans le premier système de coordonnées cylindriques.

2. Mécanisme d'accouplement (1) selon la revendication 1, dans lequel les parties saillantes $P_i$ de la pluralité $N_1$ sont disposées sur la surface latérale extérieure (14) de la partie de base (12) et les parties en retrait $Q_j$ de la pluralité $N_2$ sont disposées dans la surface latérale intérieure (24) de la partie d'ouverture (22) de sorte que l'état $S^+(k)$ et l'état $S^-(k+1)$ sont simultanément mis en oeuvre au cours de la rotation relative du premier système de coordonnées cylindriques et du deuxième système de coordonnées cylindriques avec leurs axes z coïncidant l'un avec l'autre.

3. Mécanisme d'accouplement (1) comprenant : un premier élément (10) ayant une partie de base (14) définie par une surface latérale extérieure (14) qui a une pluralité $N_2$ de parties en retrait $Q_j$ (j = 1, 2, ... , $N_2$) qui sont disposées dans une direction circonférentielle et qui sont en retrait vers l'intérieur dans une direction radiale, et un deuxième élément (20) ayant une partie d'ouverture (22) définie par une surface latérale intérieure (24) qui a une pluralité $N_1$ de parties saillantes $P_i$ (i = 1, 2, . . , $N_1$) qui sont disposées le long d'une direction circonférentielle et qui saillent vers l'intérieur dans une direction radiale, et où N2 $\geq$ N1,

où chacune des parties saillantes $P_i$ de la pluralité $N_1$ est placée dans une plage d'angle de déviation [$\Theta_{1(2i-1)}$, $\Theta_{1(2j)}$] (i = 1, 2, ..., $N_1$) dans un premier système de coordonnées cylindriques dans lequel un axe central $O_1$ de la partie d'ouverture (22) du deuxième élément (2) sert d'axe z,

où chacune des parties en retrait $Q_j$ de la pluralité $N_2$ est placée dans une plage d'angles de déviation [$\Theta_{2(2j-1)}$, $\Theta_{2(2j)}$] (j = 1, 2, ..., $N_2$) dans un deuxième système de coordonnées cylindriques dans lequel un axe central $O_2$ de la partie de base (14) du premier élément (1) sert d'axe z,

où i(k) (k = 1, 2, ... $N_1$) est défini comme $\sigma_1$({(k - 1) mod $N_1$} + 1) en utilisant une bijection $\sigma_1$ d'une séquence {1, 2, .. $N_1$}, et j(k) (k = 1, 2, .. $N_2$) est défini comme $\sigma_2$({(k - 1) mod $N_2$} + 1) en utilisant une bijection $\sigma_2$ d'une séquence {1, 2, ... $N_2$}, et

où les parties en retrait $Q_j$ de la pluralité $N_2$ disposées sur la surface latérale extérieure (14) de la partie de base (12), et les parties saillantes $P_i$ de la pluralité $N_1$ sont disposées sur la surface latérale intérieure (24) de la partie d'ouverture (22) de sorte que, pour un k arbitraire, un état $S^-(k+1)$ est mis en oeuvre au moment où un état $S^-(k)$, dans lequel $\Theta_{1(2i(k)-1)} = \Theta_{2(2j(k)-1)}$ et $\Theta_{1(2i(k))} < \Theta_{2(2j(k))}$ passe à un état $S^+(k)$, dans lequel $\Theta_{2(2j(k)-1)} < \Theta_{1(2i(k)-1)}$ et $\Theta_{1(2i(k))} = \Theta_{2(2j(k))}$ au cours d'une rotation relative du premier système de coordonnées cylindriques et du second système de coordonnées cylindriques avec leurs axes z coïncidant l'un avec l'autre,

où les parties saillantes $P_i$ de la pluralité $N_1$ sont disposées dans la direction circonférentielle sur la surface latérale intérieure (24), qui définit la partie d'ouverture (22), de sorte que chacune des parties saillantes Pi de

la pluralité $N_1$ a une largeur d'angle de déviation $\Delta_1$, et les parties saillantes $P_i$ de la pluralité $N_1$ présentent une symétrie d'ordre $N_1$ comme symétrie de rotation autour de l'axe z dans le premier système de coordonnées cylindriques, et chacune des parties en retrait $Q_j$ de la pluralité $N_2$ est placée dans une plage d'angle de déviation qui a une largeur d'angle de déviation $\Delta_2 = \Delta_1 + \varepsilon(k) + 360° / (N_1 \cdot N_2)$ ($\varepsilon(k) \geq 0$) en référence à un angle de déviation $\Theta_2(k) = (i(k) - 1) \times 360° / N_1 + k \times (\Delta_2 - \Delta_1)$ dans le second système de coordonnées cylindriques, ou où les parties en retrait $Q_j$ de la pluralité $N_2$ sont disposées dans la direction circonférentielle sur la surface latérale extérieure (14), qui définit la partie de base (12), de sorte que chacune des parties en retrait $Q_j$ de la pluralité $N_2$ a une largeur d'angle de déviation $\Delta_2$, et les parties en retrait $Q_j$ de la pluralité $N_2$ présentent une symétrie d'ordre $N_2$ en tant que symétrie de rotation autour de l'axe z dans le second système de coordonnées cylindriques, et chacune des parties saillantes $P_i$ de la pluralité $N_1$ est placée dans une plage d'angle de déviation qui a une largeur d'angle de déviation $\Delta_1 = \Delta_2 - \{\varepsilon(k) + 360° / (N_1 \cdot N_2)\}$ ($\varepsilon(k) \geq 0$) en référence à un angle de déviation $\Theta_1(k) = (i(k) - 1) \times 360° / N_2 + k \times (\Delta_2 - \Delta_1)$ dans le premier système de coordonnées cylindriques.

4. Mécanisme d'accouplement (1) selon la revendication 3, dans lequel les parties en retrait $Q_j$ de la pluralité $N_2$ sont disposées sur la surface latérale extérieure (14) de la partie de base (12) et les parties saillantes $P_i$ de la pluralité $N_1$ sont disposées sur la surface latérale intérieure (24) de la partie d'ouverture (22) de sorte que l'état $S^+(k)$ et l'état $S^-(k+1)$ sont simultanément mis en oeuvre au cours de la rotation relative du premier système de coordonnées cylindriques et du deuxième système de coordonnées cylindriques avec leurs axes z coïncidant l'un avec l'autre.

FIG.1

FIG.2

# FIG.3

$\theta_{2(13)}=155°$

$\theta_{2(12)}=135°$

$\theta_{2(11)}=125°$

$\theta_{2(14)}=165°$

$\theta_{2(10)}=115°$

20

$Q_7$

$Q_6$

$\theta_{2(15)}=190°$

$Q_5$

$\theta_{2(9)}=105°$

$\theta_{2(8)}=85°$

$Q_8$

$Q_4$

$\theta_{2(7)}=75°$

$\theta_{2(16)}=200°$

$\theta_{2(6)}=65°$

$\theta_{2(17)}=220°$

22

$Q_3$

$Q_9$

$\theta_{2(5)}=55°$

$O_2$

$\theta_{2(18)}=230°$

$\theta_{2(4)}=35°$

$Q_2$

$\theta_{2(3)}=25°$

$\theta_{2(2)}=10°$

$Q_{10}$

$\theta_{2(19)}=260°$

$\theta_{2(1)}=0°$

$\theta_{2(20)}=270°$

$Q_1$

$Q_{11}$

24

$\theta_{2(21)}=290°$

$Q_{12}$

$\theta_{2(24)}=340°$

$\theta_{2(23)}=330°$

$\theta_{2(22)}=300°$

FIG.4

(0) θ=0° S(0)

(1) θ=5° S⁻(1)/S⁺(12)

(2) θ=10° S⁻(2)/S⁺(1)

(3) θ=15° S⁻(3)/S⁺(2)

(4) θ=20° S⁻(4)/S⁺(3)

(5) θ=25° S⁻(5)/S⁺(4)

(6) θ=30° S⁻(6)/S⁺(5)

(7) θ=35° S⁻(7)/S⁺(6)

(8) θ=40° S⁻(8)/S⁺(7)

(9) θ=45° S⁻(9)/S⁺(8)

(10) θ=50° S⁻(10)/S⁺(9)

(11) θ=55° S⁻(11)/S⁺(10)

(12) θ=60° S⁻(12)/S⁺(11)

EP 3 712 454 B1

## FIG.5

## FIG.6

# FIG.7

**REFERENCES CITED IN THE DESCRIPTION**

**Patent documents cited in the description**

- JP 6061578 B